# EUROPEAN PATENT APPLICATION

(11) **EP 4 265 357 A1**
(43) Date of publication of application: **25.10.2023**
(21) Application number: 23167237.9
(22) Date of filing: 10.04.2023
(51) Int. Cl.: B22F 10/22, B22F 10/30, B22F 12/44, B22F 12/90, B23K 26/03, B23K 26/064, B23K 26/342, B33Y 10/00, B33Y 30/00, B29C 64/112, B41J 2/04

(54) **OPTICAL SYSTEMS FOR DROP-ON-DEMAND THREE-DIMENSIONAL (3D) OBJECT PRINTING**

(30) Priority: 21.04.2022 US 202217660030
(71) Applicant: Palo Alto Research Center Incorporated, Webster, NY 14580 (US)
(72) Inventor: MAEDA, Patrick Y., San Jose, 95124 (US)
(74) Representative: Gill Jennings & Every LLP

(57) **Abstract**

A 3D object printer is disclosed. The 3D object printer advantageously incorporates one or more optical systems and optical devices that improve the operation and output of the 3D object printer including, for example, a laser heating system or an optical monitoring system. A variety of arrangements of optical structures and systems are provided to guide light beam(s), such as laser beams, illumination beams, reflected light beams, etc., into or out of the fabrication environment of the 3D object printer. These optical structures and systems overcome structural and spatial constraints of the 3D object printer, which might otherwise prevent effective operation of the laser heating system or the optical monitoring system.

## Description

### FIELD

The device and method disclosed in this document relates to three-dimensional (3D) object printers and, more particularly, to optical systems for laser-assisted drop-on-demand 3D metal object printers.

### BACKGROUND

Unless otherwise indicated herein, the materials described in this section are not admitted to be the prior art by inclusion in this section.

Three-dimensional printing, also known as additive manufacturing, is a process of making a three-dimensional solid object from a digital model of virtually any shape. Many three-dimensional printing technologies use an additive process in which an additive manufacturing device ejects drops or extrudes ribbons of a build material to form successive layers of the part on top of previously deposited layers. Some of these technologies use ejectors that eject UV-curable materials, such as photopolymers or elastomers, while others melt plastic materials to produce thermoplastic material that is extruded to form successive layers of thermoplastic material. These technologies are used to construct three-dimensional objects with a variety of shapes and features. This additive manufacturing method is distinguishable from traditional object-forming techniques, which mostly rely on the removal of material from a work piece by a subtractive process, such as cutting or drilling.

Recently, some 3D object printers have been developed that eject drops of melted metal from one or more ejectors to form 3D metal objects. These printers have a source of solid metal, such as a roll of wire, macro-sized pellets, or metal powder, and the solid metal is fed into a heated receptacle of the printer where the solid metal is melted and the melted metal fills the receptacle. The receptacle is made of non-conductive material around which an electrical wire is wrapped to form a coil. An electrical current is passed through the coil to produce an electromagnetic field that causes a drop of melted metal at the nozzle of the receptacle to separate from the melted metal within the receptacle and be propelled from the nozzle. A platform is configured to move in a X-Y plane parallel to the plane of the platform by a controller that operates actuators so that melted metal drops ejected from the nozzle form metal layers of an object on the platform. The controller operates another actuator to alter the position of the ejector or platform to maintain an appropriate distance between the ejector and an existing layer of the metal object being formed. This type of metal drop ejecting printer is called a magnetohydrodynamic (MHD) printer.

While magnetohydrodynamic printing has made great progress, the parts fabricated from conventional magnetohydrodynamic printing systems often exhibit inconsistencies with respect to build strength, adhesion, porosity, surface finish, cracking, fractures, Z-height errors, and the like. In view of the foregoing, secondary or post-printing processes, such as machining and finishing, are often implemented to address the inconsistencies in the objects fabricated from conventional magnetohydrodynamic printing systems. These post-printing processes, however, greatly reduce productivity and correspondingly increase the cost of fabricating the part via magnetohydrodynamic printing.

### SUMMARY

An additive manufacturing device for fabricating a part is disclosed. The additive manufacturing device comprises a platen having a surface configured to support the part during fabrication of the part. The additive manufacturing device further comprises an ejector head arranged above the surface of the platen. The ejector head is configured to eject droplets of a molten build material toward the surface of the platen to fabricate the part. The additive manufacturing device comprises an optical system having at least one structure configured to redirect light between (i) a first location in a fabrication environment situated between the platen and the ejector head and (ii) a second location.

A method for fabricating a part using an additive manufacturing device is also disclosed. The method comprises ejecting, using an ejector head, droplets of a molten build material toward a platen to fabricate a part within a fabrication environment situated between the platen and the ejector head. The method further comprises redirecting light between a first location within the fabrication environment and at least one second location that is external to the fabrication environment. The redirecting includes at least one reflection of the light. At least one of a light source and a light sensor is positioned at the least one second location. The light includes at least one of (i) light generated by the light source and redirected onto at least one of the part and the droplets, (ii) light reflected from at least one of the part and the droplets and redirected onto the light sensor, and (iii) thermally emitted light from at least one of the part and the droplets and redirected onto the light sensor. The method further comprises at least one of controlling and monitoring at least one characteristic of at least one of the part and the droplets using the at least one of the light source and the light sensor.

### BRIEF DESCRIPTION OF THE DRAWINGS

The foregoing aspects and other features of the additive manufacturing device are explained in the following description, taken in connection with the accompanying drawings.
FIG. 1 shows a cross-sectional view of an exemplary 3D object printer incorporating a laser heating system and an optical monitoring system.
FIGs. 2A and FIG. 2B show exemplary arrangements and components of the optical monitoring system.
FIG. 3 shows an arrangement of an optical device in which a light beam has a direct optical path between the optical device and a target location, but with a high angle of incidence.
FIGs. 4A and 4B show a first exemplary transparent rod having an angled end face.
FIG. 5A shows a cross-section of a transparent rod having a flat side surface.
FIG. 5B shows an exemplary elliptical beam footprint that may occur with the transparent rod of FIG. 5A at a non-zero angle of incidence.
FIG. 6A shows a cross-section of a transparent rod having a side surface with a different radius of curvature.
FIG. 6B shows an exemplary circularized beam footprint that may occur with the transparent rod of FIG. 6A at a non-zero angle of incidence.
FIG. 7 shows the transparent rod of FIGs. 4A and 4B with different rotations resulting in different angles of incidence of a light beam.
FIGs. 8A and 8B show a cross-sectional view of a first exemplary embodiment of the 3D object printer that incorporates the transparent rod of FIGs. 4A and 4B.
FIGs. 9A and 9B show a second exemplary transparent rod having an angled end face.
FIGs. 10A and 10B show a second exemplary embodiment of the 3D object printer that incorporates the transparent rod of FIGs. 9A and 9B.
FIGs. 11A, 11B, and 11C show exemplary optical systems having multiple transparent rods that are connected by a transparent joint.
FIGs. 12A and 12B show an exemplary reflective rod having an angled end face.
FIG. 13A shows a variation of a reflective rod in which an angled end face has a cylindrical shape.
FIG. 13B shows an exemplary elliptical beam footprint that may occur with the transparent rod of FIG. 12A and 12B at a non-zero angle of incidence.
FIG. 13C shows an exemplary circularized beam footprint that may occur with the reflective rod of FIG. 13A at a non-zero angle of incidence.
FIG. 14 shows the reflective rod of FIGs. 12A and 12B with different rotations resulting in different angles of incidence of a light beam.
FIGs. 15A and 15B show a cross-sectional view of a third exemplary embodiment of the 3D object printer that incorporates the reflective rod of FIGs. 12A and 12B.
FIG. 16 shows a fourth exemplary embodiment of the 3D object printer 100 that incorporates a rod of the optical system embedded within a heat shield.
FIGs. 17A and 17B show an exemplary light source having a collimator.
FIG. 18A shows a first arrangement for coupling the light source with a transparent rod.
FIG. 18B shows a second arrangement for coupling the light source with a transparent rod.
FIG. 19A shows a third arrangement for coupling the light source with an optical system.
FIG. 19B shows a fourth arrangement for coupling the light source with a transparent rod.
FIG. 20A shows a fifth arrangement for coupling the light source with a reflective rod.
FIG. 20B shows a sixth arrangement for coupling the light source with a reflective rod.
FIG. 21 shows a flow diagram for a method for fabricating a part using an additive manufacturing device.

### DETAILED DESCRIPTION

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles of the disclosure as would normally occur to one skilled in the art which this disclosure pertains.

### 3D Object Printer

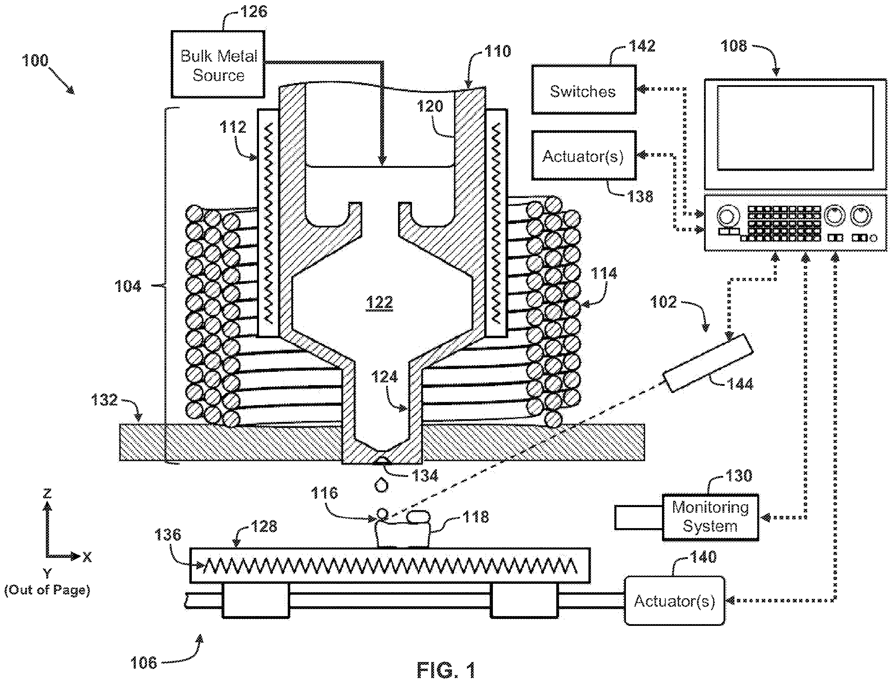

FIG. 1 shows an exemplary 3D object printer 100. In the illustrated and described embodiments, the 3D object printer 100 is a liquid metal jet printing system, such as a magnetohydrodynamic (MHD) printer. However, it any additive manufacturing device, including those using non-metal build materials, may utilize the laser heating system 102 and the optical systems thereof disclosed herein. The 3D object printer 100 advantageously incorporates one or more optical systems and optical devices that improve the operation and output of the 3D object printer 100. Particularly, in the illustrated and described embodiments, the 3D object printer 100 includes a laser heating system 102 and an optical monitoring system 130, which are discussed in greater detail below after a general description of the 3D object printer 100.

The 3D object printer 100 includes an ejector head 104 and a build platform 106. As used herein, the term "ejector head" refers to the housing and components of a 3D object printer that melt, eject, and regulate the ejection of melted drops of build material for the production of 3D objects. The ejector head 104 includes a body 110 (which may also be referred to as a pump chamber), one or more heating elements 112, and one or more metallic coils 114, which are operably coupled with one another. The heating elements 112 are at least partially disposed about the body 110, and the metallic coils 114 are at least partially disposed about the body 110 and/or the heating elements 112. The body 110 has an inner surface 120 defining an inner vessel 122 thereof. The body 110 defines a nozzle 124 disposed at a first end of the body 110, which extends through an opening defined in a heat shield 132. As used herein, the term "nozzle" means a structure defining an orifice that is fluidically connected to a volume or vessel containing melted build material and that is configured for the expulsion of melted drops of build material from the volume or vessel. The head shield 132 is arranged between the body 110 of the ejector head 104 and the build platform 106. The nozzle 124 has an orifice 134 at an end of the portion thereof that extends through the opening of the heat shield 132, via which the ejector head 104 ejects droplets of build material onto a substrate 116 to fabricate a part 118. As used herein, the term "part" means an object of manufacture made with a 3D metal drop ejecting apparatus.

The build platform 106 comprises at least a platen 128, such as heated platen 128 having a heating element 136, onto which the ejector head 104 ejects droplets of build material to form the part 118. As used herein, the substrate 116 refers the surface upon which the ejector head 104 ejects new droplets of build material. Thus, at least for an initial layer of build material, the substrate 116 refers to a top surface of the platen 128 and, for subsequent layers of material, the substrate 116 refers to a surface of the previously deposited build material and/or a surface of the partially fabricated part 118.

In an exemplary operation of the 3D object printer 100, a build material (e.g., metal) from a source 126 of bulk material (e.g., bulk metal) is directed to the inner vessel 122 of the body 110. As used herein, the term "bulk material" means build material available in aggregate form, such as metal wire of a commonly available gauge, macro-sized metal pellets, and metal powder. As used herein, the term "vessel" means a hollow volume having a receptacle configured to hold a liquid or solid substance. In at least one embodiment, the build material includes one or more metals and/or alloys thereof. The heating elements 112 at least partially melt the build material contained in the inner vessel 122 of the body 110. In particular, the build material may be a solid metal, and the heating elements 112 heat the body 110 and thereby heat the metal from a solid to a liquid (e.g., molten metal). As used herein, the term "metal" means a metal as defined by the periodic chart of elements or alloys formed with these metals. Illustrative metal build materials include, but are not limited to, aluminum, aluminum alloys, brass, bronze, chromium, cobalt-chrome alloys, copper, copper alloys, iron alloys (Invar), nickel, nickel alloys (Inconel), nickel-titanium alloys (Nitinol), stainless steel, tin, titanium, titanium alloys, gold, silver, molybdenum, tungsten, or the like, or alloys thereof, or any combination thereof.

The metallic coils 114 are coupled with a power source (not shown) configured to facilitate the ejection of melted droplets of the build material onto the substrate 116. In particular, the metallic coils 114 and the power source coupled therewith are configured to generate a magnetic field that generates an electromotive force within the body 110 that generates an induced electrical current in the molten metal disposed in the body 110. The magnetic field and the induced electrical current in the molten metal creates a radially inward force on the liquid metal, known as a Lorentz force, which creates a pressure at the nozzle 124. The pressure at the nozzle 124 expels the molten metal through the orifice 134 and out of the nozzle 124 toward the substrate 116 and/or the build platform 106 in the form of one or more droplets to thereby form at least a portion of the part 118.

With continued reference to FIG. 1, the 3D object printer 100 includes a computing system 108. The computing system 108 at least includes a processor and memory (not shown). The processor is configured to execute instructions to operate the computing system 108 and/or the 3D object printer 100 to enable the features, functionality, characteristics and/or the like as described herein. The processor generally comprises one or more processors which may operate in parallel or otherwise in concert with one another. It will be recognized by those of ordinary skill in the art that a "processor" includes any hardware system, hardware mechanism or hardware component that processes data, signals or other information. Accordingly, the processor may include a system with a central processing unit, graphics processing units, multiple processing units, dedicated circuitry for achieving functionality, programmable logic, or other processing systems. The memory is configured to store data and program instructions that, when executed by the processor, enable the computing system 108 and/or the 3D object printer 100 to perform various operations described herein. The memory may be of any type of device capable of storing information accessible by the processor, such as a memory card, ROM, RAM, hard drives, discs, flash memory, or any of various other computer-readable medium serving as data storage devices, as will be recognized by those of ordinary skill in the art.

The computing system 108 is operably and/or communicably coupled with any one or more of the components of the 3D object printer 100. Particularly, the computing system 108 is at least operably and/or communicably coupled with one or more switches 142 configured to operate the metallic coils 114 to eject melted droplets of the build material onto the substrate 116, as discussed above (e.g., by connecting and disconnecting the metallic coils 114 from the power source).

Additionally, the computing system 108 is operably and/or communicably coupled with actuators 138, 140 configured to move certain components of the 3D object printer 100 independently from one another or together with one another. Particularly, in at least one embodiment, any one or more components of the 3D object printer 100 may move independently with respect to one another. For example, in some embodiments, the ejector head 104 and the platen 128 of the build platform 106 (or any other components of the 3D object printer 100) are configured move independently from one another along an X-axis, a Y-axis, and/or a Z-axis. Similarly, any two or more components of the 3D object printer 100 may be coupled with one another such that the two or more components move with one another. For example, the ejector head 104 may be coupled with one or both of the laser heating system 102 and the optical monitoring system 130 via respective mounts or the like (not shown). In this way, movement or translation of the ejector head 104 along the X-axis, the Y-axis, and/or the Z-axis results in a corresponding movement or translation of the laser heating system 102 and/or the optical monitoring system 130 along the X-axis, the Y-axis, and/or the Z-axis, respectively.

In some embodiments, the computing system 108 is configured to the operate actuator(s) 138 to move the ejector head 104 at least along the Z-axis. Particularly, in one embodiment, the ejector head 104 is movably mounted within Z-axis tracks or a similar mechanism (not shown) configured for movement of the ejector head 104 (and any other components fixedly mounted thereto) relative to the platen 128 of the build platform 106. The actuator(s) 138 are configured to move the ejector head 104 along the Z-axis by way of the Z-axis tracks. The computing system 108 operates these actuator(s) 138 to maintain an appropriate distance in the Z-direction between the orifice 134 of the nozzle 124 and the substrate 116. In further embodiments, the ejector head 104 is similarly configured to also move along the X-axis and/or the Y-axis.

In some embodiments, the computing system 108 is configured to the operate actuator(s) 140 to move at least the platen 128 of the build platform 106 along an X-Y plane defined by the X-axis and the Y-axis. Particularly, in one embodiment, the platen 128 is movably mounted within X-axis and Y-axis tracks or similar mechanisms (not shown) configured for movement of the platen 128 (and any other components fixedly mounted thereto) relative to the ejector head 104. The actuator(s) 140 are configured to move the platen 128 of the build platform 106 along the X-Y plane by way of the X-axis and Y-axis tracks. The computing system 108 operates these actuator(s) 140 to provide the necessary X-Y positioning of the substrate 116 with respect to the orifice 134 of the nozzle 124. In further embodiments, the platen 128 of the build platform 106 is similarly configured to also move along the Z-axis.

In an exemplary operation of the 3D object printer 100, in order to fabricate the part 118, the computing system 108 operates the actuator(s) 138 to position the orifice 134 of the nozzle 124 over the substrate 116 at a defined distance from in the Z-direction the substrate 116 (e.g., between 4mm and 8mm). Next, the computing system 108 operates the switches 142 to cause the nozzle 124 to eject molten metal droplets of onto the substrate 116 to begin forming the part 118. Simultaneously or sequentially with ejecting the molten metal droplets, the computing system 108 also operates the actuators 140 to move the platen 128 of the build platform 106 in the X-Y plane to, thereby, form swaths or layers of melted metal on the substrate 116 to form the part 118. As each layer of metal is deposited onto the substrate 116, the computing system 108 operates the actuator(s) 138 to maintain an appropriate distance in the Z-direction between the orifice 134 and the substrate 116. (e.g., between 4mm and 8mm). In alternate configurations, the computing system 108 may similarly move the ejector head 104 in the X-Y plane or move the move the platen 128 along the Z-axis.

In the exemplary operation of the 3D object printer 100, the computing system 108 requires data from external sources to facilitate the fabrication the part 118. In general, a three-dimensional model or other digital model of the part 118 that is to be fabricated is stored in a memory operatively connected to the computing system 108. In one embodiment, the computing system 108 is configured to access the digital model through a server or the like, a remote database in which the digital model is stored, or a computer-readable medium in which the digital model is stored. In one embodiment, the computing system 108 (or another processor or controller) processes the digital model to generate machine instructions for execution by the computing system 108 in a known manner to operate the components of the 3D object printer 100 to form the part 118 corresponding to the model. The generation of the machine instructions can include the production of intermediate models, such as when a CAD model of the device is converted into an STL data model, a polygonal mesh, or other intermediate representations, which in turn can be processed to generate machine instructions, such as g-code, for fabrication of the object by the 3D object printer 100. As used herein, the term "machine instructions" means computer language commands that are executed by a computer, microprocessor, or controller to operate components of a 3D object additive manufacturing system. The computing system 108 executes the machine instructions to control the ejection of the melted metal drops from the nozzle 124, to control the positioning of the platen 128, and to control the positioning of the ejector head 104, as discussed above.

### Laser Heating System

As mentioned above, the 3D object printer 100 advantageously includes a laser heating system 102. It should be appreciated that forming structures with molten metal droplets is a complex thermo-fluidic process that involves re-melting, coalescence, cooling, and solidification. Voids and cold lap (lack of fusion) are caused by poor re-melting and insufficient metallurgical bonding under inappropriate temperatures at the interface formed between the molten metal droplets and previously deposited material or substrates (e.g., droplets). This interfacial temperature is primarily a function of the droplet temperature and the surface temperature of the previously deposited material or substrate. Obtaining and retaining accurate part shape and Z-height are also negatively impacted by the same factors. An interfacial temperature that is too low results in the formation of voids and cold laps from insufficient re-melting and coalescence. Conversely, if the interfacial temperature is too high, the new droplets flow away from the surface of previously deposited material before solidification, which leads to the malformation of part shape and Z-height error.

The interfacial temperature can be managed by controlling the initial droplet temperature, the build part surface temperature, the build plate temperature, drop frequency, and part Z-height. These factors can be controlled at some level through process parameter optimization, but the thermal processes involved may be too slow to keep up with the changes and dynamics that occur during part printing that can result in unacceptable interfacial temperatures.

To address the aforementioned issues, the computing system 108 is configured to operate the laser heating system 102 to modify interfacial temperatures and/or temperature gradients of a substrate and/or an area proximal the substrate to control grain size, growth, and/or structure of the metal forming the part 118. For example, in one embodiment, the laser heating system 102 is operated to modify interfacial temperatures and/or temperature gradients of ejected molten metal on the substrate 116 to control grain size, growth, and/or structure of the metal forming the part 118, thereby improving build strength, adhesion, porosity, and/or surface finish, and preventing cracks and fractures in the article.

With continued reference to FIG. 1, the laser heating system 102 of the 3D printer 100 may include one or more lasers 144 (only a single laser 144 is illustrated for simplicity). The lasers 144 may include external optical components like filters, collimating optics, focusing optics and beam shaping optics to achieve desired irradiance levels, irradiance pattern (i.e., circular, elliptical, etc.), and irradiance profiles (i.e., Gaussian, top-hat, doughnut mode, multimode, etc.). In at least some embodiments, the laser(s) 144 are coupled with the ejector head 104 via a mount (not shown). However, in other embodiments, that the laser(s) 144 and/or the laser heating system 102 may be coupled with any other component of the 3D object printer 100, such as the build platform 106. The laser(s) 144 are configured to direct a laser beam onto the substrate 116 or proximate to the substrate 116 to thereby heat the substrate 116 or a portion thereof.

The laser(s) 144 of the laser heating system 102 may include any suitable laser that is configured to sufficiently heat the substrate 116 and/or an area proximal the substrate 116. In at least one embodiment, the type of the laser(s) 144 utilized may be at least partially dependent on the build material, such as the type of metal being deposited to fabricate the article 118. In another embodiment, the type of the laser(s) 144 utilized at least partially depends on a rate at which the drops are deposited on the substrate 116 or the deposition rate. In at least some embodiments, the laser(s) 144 are configured to generate a thin pencil-like laser beam with a diameter of, for example 0.5mm. In at least some embodiments, the laser(s) 144 are configured to generate a diffraction limited laser beam (low beam parameter product (BPP)). In one embodiment, the laser(s) 144 include a fiber laser. For example, commercially available 1070nm fiber lasers can provide high power, low divergence beam, beam profile shaping, and CW/Pulse modulation. A 1070nm, 0.5mm diameter fiber laser beam has a depth of focus of 168mm or more.

In an exemplary embodiment, the laser(s) 144 may have an irradiance of from about 1 W/cm² to about 1 MW/cm². It should be appreciated that much lower power lasers or laser arrays could also be used depending on the application, metal, configuration and spot size. It should further be appreciated that any one or more of the lasers 144 may include a combination of power and optical configurations, including collimated and non-collimated lasers, that may achieve the desired irradiance.

The computing system 108 is configured to operate the laser heating system 102 to heat at least a portion of the substrate 116 and/or an area proximal the substrate 116. For example, the laser heating system 102 is configured to heat at least a portion of the platen 128, a portion of the part 118, respective surfaces thereof, and/or areas proximal thereto. The laser heating system 102 may heat the portion of the substrate 116 before, during, and/or after deposition of the one or more drops of the molten metal on the substrate 116 and/or an area proximal the substrate 116.

In an exemplary embodiment, the laser heating system 102 heats a portion of the substrate 116 corresponding to the deposition of melted drops and/or the melt pool, before and/or during the deposition of the drops on the substrate 116. It should be appreciated that the deposition of the drops on the substrate 116 may create or form a melt pool on the substrate 116, and the laser heating system 102 is configured to at least partially modulate (e.g., increase, decrease, alter, etc.) an interfacial temperature or a temperature gradient of the melt pool to thereby control one or more properties of the resulting solid metal forming the part 118. For example, modulating the temperature gradient of the melt pool may allow the 3D object printer 100 to control a grain size, grain growth, grain structure, grain orientation, and/or grain boundaries, of the resulting solid metal forming the part 118. It should be appreciated that metal grain formation, structure, and/or properties (e.g., size, growth, orientation, boundaries, etc.) may at least partially determine one or more mechanical properties of the resulting portion of the part 118. For example, the grain formation and/or structure may at least partially determine a yield stress, ductility, hardness, fatigue life, or combinations thereof, of the resulting solid metal forming the part 118. As such, the laser heating system 102 is configured to at least partially heat the portions of the substrate 116 to thereby controls one or more properties of the solid metal forming the part 118.

In some embodiments, the computing system 108 is configured to operate the laser heating system 102 to heat a portion of the substrate 116 that is adjacent or proximal the deposition of melted drops and/or the melt pool. For example, the laser heating system 102 is configured to at least partially heat a portion of the substrate 116 adjacent to or outside of the deposition of melted drops and/or the melt pool. It should be appreciated that heating the portion of the substrate 116 near, proximal, or adjacent the deposition of the drops and/or the melt pool may reduce surface roughness and/or provide improved surface finishing capabilities as compared to a surface without heating from the targeted hearing system 102.

In some embodiments, the computing system 108 is configured to operate the laser heating system 102 to reheat or re-melt a previously deposited drop or section of the part 118 to control the interfacial temperature and/or temperature gradient of the melt pool as the molten metal drops and the previously deposited metals are coalescing to thereby improve the mechanical and/or build qualities of the part 118. It should be appreciated that an amount of heat or thermal energy needed to sufficiently control the temperature gradient of the melt pool may be minimal as a temperature of the part 118 and/or the melt pool or the coalescing region thereof is already maintained at a relatively high temperature. As such, the laser heating system 102 may be cost effectively operated and provide sufficient thermal energy to control the temperature gradient of the melt pool. It should further be appreciated that the laser heating system 102 may be operated in an on-line manner such that productivity is not reduced. For example, the laser heating system 102 may be operated alongside the other components of the 3D object printer 100 to provide articles 118 with improved properties and without an off-line secondary or post-printing process.

In some embodiments, the laser heating system 102 directly heats an area having a diameter of from about 0.025 mm to about 2.0 mm. For example, the output (e.g., laser beam) of the laser heating system 102 may have a diameter or a major axis of from about 0.025 mm to about 2.0 mm.

In some embodiment, the computing system 108 is configured to operate the laser heating system 102 such that the substrate 116, the area proximal the substrate 116, and/or near the part 118 being fabricated is maintained at a temperature of from about 200°C to about 600°C. It should be appreciated that all or substantially all the components of the laser heating system 102 is configured to operate in the temperatures of the substrate 116, the area proximal the substrate 116, and/or near the part 118. It should be appreciated that the droplet and substrate temperatures will be different for different metals.

In some embodiments, the computing system 108 is configured to operate the laser heating system 102 to heat the substrate 116 and/or the area proximal the substrate 116 to a temperature of at least about 60% to about 100% of a melting point of the build material. For example, the laser heating system 102 is configured to heat the substrate 116 and/or the area proximal the substrate 116 to a temperature of at least about 95% of the melting point of the build material. In another example, the laser heating system 102 is configured to increase a temperature of the substrate 116 and/or the area proximal the substrate 116 (e.g., a coalescence area or melt pool) about ± 10% of a melting point of the build material.

### Optical Monitoring System

As mentioned above, the 3D object printer 100 advantageously includes an optical monitoring system 130. The optical monitoring system 130 may, for example, include one or more illuminators and/or one or more sensors configured to measure droplet temperatures, build part temperatures, build plate temperatures, substrate temperatures, build part shape, build part Z-height, droplet size, droplet rate, or the like, or any combination thereof. These measurements may enable various types of feedback control to be implemented by the computing system 108. Particularly, in some embodiments, the optical monitoring system 130 is configured to communicate with the computing system 108 to provide feedback measurements. In some embodiments, the computing system 108 operates the components of the 3D object printer 100 with reference to the feedback measurements in a closed-loop manner. Additionally, these measurements enable the computing system 108 to monitor the operation of the 3D object printer 100 for conditions that may result in a printed object 118 having inferior quality, such as non-uniform drop ejection (also referred to as drop jitter).

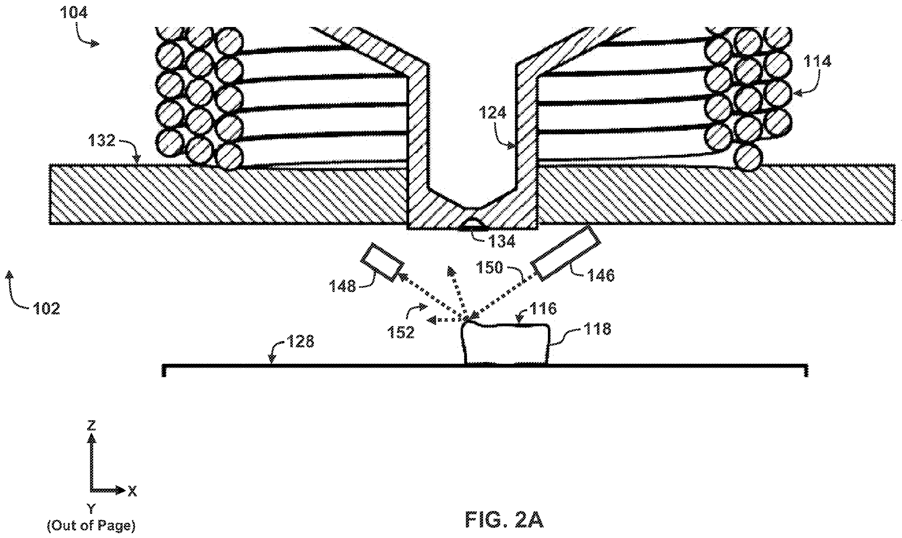

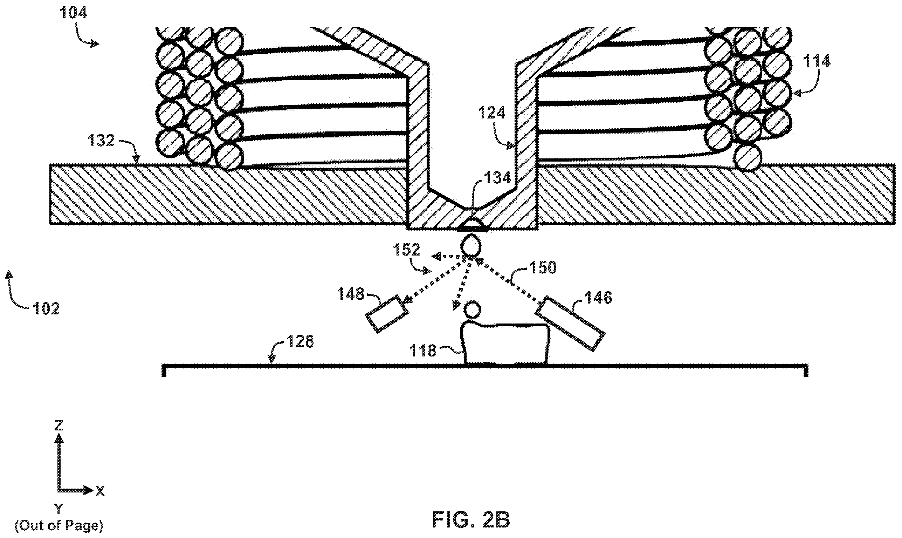

FIGs. 2A and 2B show exemplary arrangements and components of the optical monitoring system 130. Particularly, in the illustrated embodiments, the optical monitoring system 130 includes an optical illuminator 146. The optical illuminator 146 is a light source configured to shine a light into the fabrication environment of the 3D object printer 100, for example onto the substrate 116 or onto melted droplets as they are ejected from the nozzle 124. This illumination can serve a variety of purposes, included generating light that is reflected toward a sensor of the optical monitoring system 130. To these ends, the optical illuminator 146 may, for example, comprise an LED, a lamp of various types, pulsating/strobe light, a fiber optic light source, an infrared light source, a laser, or the like, or combinations thereof. In some embodiments, the optical monitoring system 130 comprises a plurality of optical illuminators 146 of various types and purposes.

Additionally, in the illustrated embodiments, the optical monitoring system 130 includes an optical sensor 148. The optical sensor 148 is a sensor configured to receive reflected light and/or thermally emitted light (i.e., thermal radiation) from the fabrication environment of the 3D object printer 100, for example light reflected from and/or thermal radiation emitted from the substrate 116 or from melted droplets as they are ejected from the nozzle 124. This optical sensor 148 can serve a variety of purposes, including measuring droplet temperatures, build part temperatures, build plate temperatures, substrate temperatures, build part shape, build part Z-height, droplet size, droplet rate, or the like. To this end, the optical sensor 148 may, for example, comprise a pyrometer, an imaging camera, a photodiode, infrared sensors, or the like, or combinations thereof. In some embodiments, the optical monitoring system 130 comprises a plurality of optical sensors 148 of various types and purposes. In addition, it should be appreciated that the sensors of the optical monitoring system 130 are not limited only to optical sensors and may include additional sensors for measuring various other aspects of the operation of the 3D object printer 100.

It will be appreciated that the type of light generated by the optical illuminator 146 will vary depending on the type of the optical illuminator 146 and depending on the purpose of the illumination. Accordingly, the beam of light 150 may, for example, comprise visible light, ultra-violet light, infrared light, or even a laser beam. In the illustration of FIG. 2A, the optical illuminator 146 is arranged to direct a beam of light 150 toward the substrate 116 for the purposes of illuminating the substrate 116 and/or measuring one or more characteristics of the material of the substrate 116. The optical sensor 148 is, likewise, arranged to received reflected light 152 that is reflected from the substrate 116. In another embodiment, illustrated in FIG. 2B, the optical illuminator 146 is instead arranged to direct the beam of light 150 toward the melted droplets and/or the nozzle 124 as they are ejected toward the substrate 116, for the purposes of illuminating the droplets and/or measuring one or more characteristics of the droplets or the ejection process. The optical sensor 148 is, likewise, arranged to received reflected light 152 that is reflected from the melted droplets and/or the nozzle 124. In one embodiment, the optical illuminator 146 is a pulsating light source that configured to emit pulses of light that are synchronized with the droplet ejection from the nozzle 124.

In some embodiments, the optical illuminator 146 may be omitted from optical monitoring system 130 and the optical sensors 148 may be configured to only measure thermally emitted light (i.e., thermal radiation) from the fabrication environment of the 3D object printer 100. Particularly, it will be appreciated by those of ordinary skill in the art that some characteristics of the droplets or the ejection process, such as temperature, can be measured without any optical illumination.

In some embodiments, the computing system 108 is configured to operate the optical illuminator 146 to shine light into the fabrication environment of the 3D object printer 100 and operates the optical sensor 148 to measure droplet temperatures, build part temperatures, build plate temperatures, substrate temperatures, build part shape, build part Z-height, droplet size, droplet rate, or the like.

### Optical Systems of the 3D Object Printer

Although not illustrated in FIGs. 1 and 2A-2B for simplicity, the laser heating system 102 further includes optical systems for delivering the laser beam from a location at which the laser 144 is arranged to a target location within the fabrication environment of the 3D object printer 100, such as on the substrate 116 and/or proximal to the substrate 116, so as to provide heating and melting functions discussed above. Likewise, the optical monitoring system 130 further includes optical systems for delivering light from a location at which the optical illuminator 146 is arranged to a target location within the fabrication environment of the 3D object printer 100, such as on the substrate 116, proximal to the substrate 116, in the path of the melted droplets, and/or at the nozzle 124, so as to provide the illumination functions discussed above. Finally, the optical monitoring system 130 further includes optical systems for delivering light reflected or thermally emitted from the target location in the fabrication environment of the 3D object printer 100 to the optical sensor 148, so as to provide the measurement functions discussed above. As used herein, the "fabrication environment" refers to a spatial area within which an object (e.g., the part 118) is fabricated by a 3D object printer (e.g., the 3D object printer 100). As used with respect to the illustrated embodiments, the "fabrication environment" refers generally to the spatial area situated between the platen 128 and the ejector head 104, in particular between the platen 128 and the heat shield 132 and/or the nozzle 124.

It should be appreciated that, in many embodiments of the 3D object printer 100, there are significant spatial and structural constraints that make it challenging to provide a direct optical path for the ingoing and outgoing light between the target location and optical devices of the laser heating system 102 and the optical monitoring system 130. For instance, in many embodiments, the 3D object printer 100 operates with a very small distance between the substrate 116 and the head shield 132 of the ejector head 104, e.g., between 4mm and 8mm, leaving little space to suitably arrange the optical devices to provide a direct optical path to and from the target location. Additionally, in many embodiments, the structure of the ejector head 104 is also quite wide (e.g., the heat shield 132 may be greater than 50mm wide) such that it obstructs arranging the optical devices to provide a direct optical path that has a low angle of incidence (AOI) with a target location on the surface of the substrate 116 (e.g., less than 80 degrees). As used herein, angles of incidence of a light beam with a surface are measured relative to an orthogonal incidence with the surface (i.e., a 0° angle of incidence refers to an incidence of the light beam with that is parallel with the surface normal).

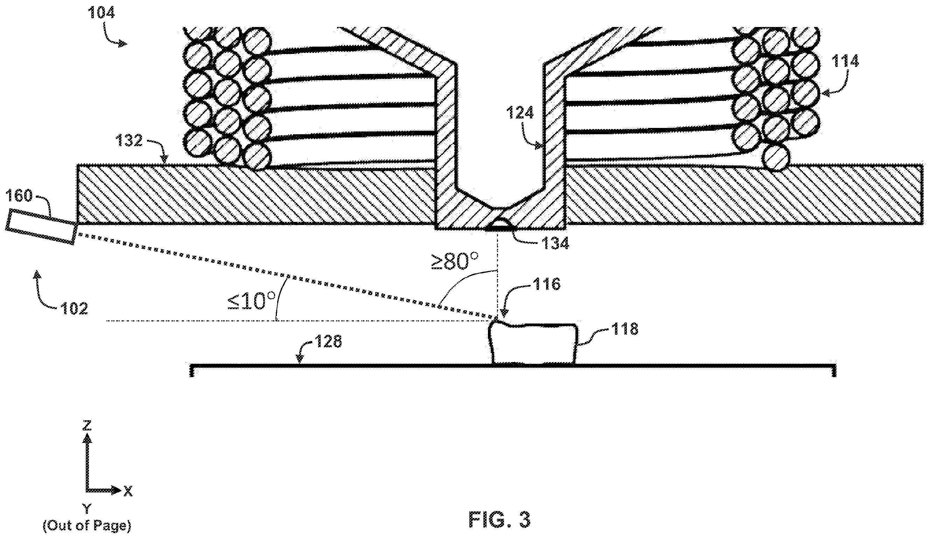

As a result, in such embodiments, the only arrangement of the optical devices of the laser heating system 102 and the optical monitoring system 130 to provide direct optical path is one in which the light beam has a very high, near glancing, angle of incidence with the target location. FIG. 3 shows an arrangement of an optical device 160, which may correspond to one of the laser 144, the optical illuminator 146, or the optical sensor, in which the light has a direct optical path between the optical device 160 and a target location on the substrate 116, but with a high angle of incidence. As can be seen, the optical device 160 is arranged near one end of the heat shield 132. In this arrangement, a direct optical path of the light beam is achieved, but at the cost of a very high, near glancing, angle of incidence (e.g., greater than 80 degrees). It should be appreciated that, for an ingoing light beam (e.g., a laser beam or illumination light) with a circular cross-section or radially symmetric cross-section, one drawback to a high angle of incidence is that the projected light beam footprint on the substrate 116 becomes increasingly elliptical as the angle of incidence increases. Accordingly, with a very high angle of incidence, the projected light beam footprint on the substrate 116 is highly elliptical. In the case of the laser heating system, a highly elliptical laser beam footprint inhibits the ability of the laser heating system 102 to precisely and accurately heat only the target location on the substrate 116 and/or proximal to the substrate 116. Generally, a lower angle of incidence (e.g., closer to 45 degrees or less) is desirable for the laser beam of the laser heating system 102.

To overcome these challenges, one or both of the laser heating system 102 and the optical monitoring system 130 include respective optical systems having at least one structure configured to guide or redirect the light beam of the optical device 160 between the target location with the fabrication environment and the location at which the optical device 160 is arranged. The structures of the optical system may comprise any structure configured to reflect, refract, shape, or focus a light beam generated by a light source and/or reflected or thermally emitted from the target location. Examples of such structures include transparent material bodies, such as prisms, optical rods, light guides, optical lenses, optical filters and the like, as well as optically reflective bodies, such as mirrors and other structures having reflective coatings or layers. It should be appreciated that the terms "transparent" and "reflective" are used with respect to the particular light beam with which the structure is utilized. Particularly, as used herein with respect to the structures of the optical system, the term "transparent" means that the material or structure allows for transmission of light therein at the frequency/wavelength of the light beam with which the structure is utilized. Likewise, as used herein with respect to the structures of the optical system the term "reflective" means that the material or structure reflects light at the frequency/wavelength of the light beam with which the structure is utilized.

By way of the below examples, it should be understood that an arbitrary combination and arrangement of optical structures can be combined to guide light beam(s), such as laser beams, illumination beams, reflected light beams, thermal radiation, etc., as necessary according the structural and spatial constraints of the 3D object printer 100. Essentially similar optical structures can be utilized to guide light into the fabrication environment and out of the fabrication environment, regardless of the type of light or the purpose of the light.

In at least some embodiments, the optical system of the laser heating system 102 or of the optical monitoring system 130 includes at least one transparent rod via which the light beam travels along a longitudinal axial direction thereof. In general, the transparent rod is configured to receive the light beam from the optical device 160 or provide the light beam to the optical device 160 at a first end. The light beam travels through the transparent rod along the longitudinal axial direction from the first end to a second end. The light beam exits or enters the transparent rod at the second end. In at least some embodiments, the second end of the first transparent rod has an angled end face with an angle relative to the longitudinal axis of the transparent rod. The angle of the angled end face is configured to cause a total internal reflection (TIR) of the light beam such that the light beam is redirected with respect to the longitudinal axis and exits or enters via a side surface of the second end that is proximate to angled end face.

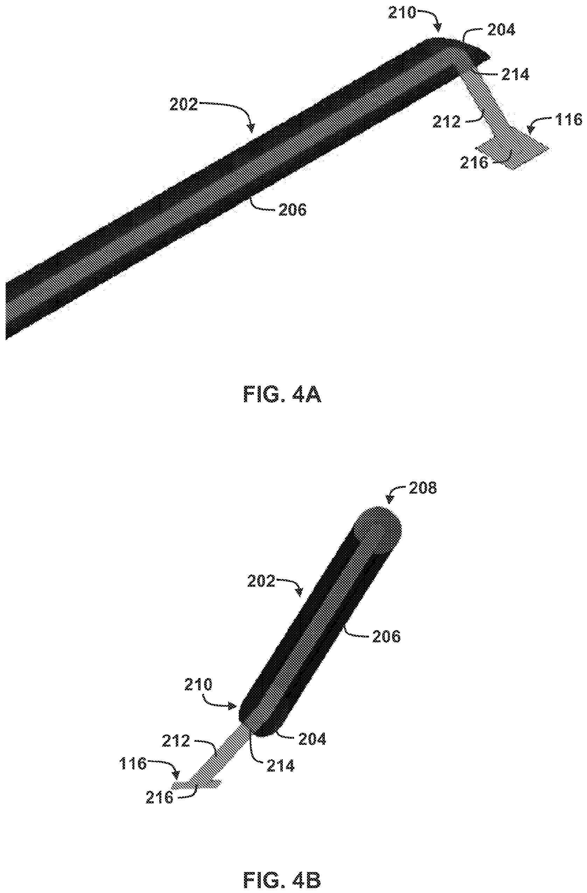

FIGs. 4A and 4B show an exemplary transparent rod 202 having an angled end face 204. The transparent rod 202 has an essentially cylindrical elongated body 206 with a first end 208 and a second end 210. The body 206 is composed of a transparent material such as quartz, glass, a polymer, or a plastic. Regardless of the particular material, the body 206 should be capable of being subjected to high temperatures without damage. In the illustrated embodiment, the body 206 has a cross-section that is at least partially circular and/or elliptical. However, in other embodiments, the body 206 may have a variety of different cross-sectional shapes.

The first end 208 of the body 206 receives a light beam 212 from the optical device 160 and/or provides the light beam 212 to the optical device 160 (not shown). The second end 206 has an angled end face 204 with an angle relative to the longitudinal axis of the elongated body 206. The angle of the angled end face 204 is configured to cause a total internal reflection (TIR) of the light beam 212 such that the light beam 212 is redirected with respect to the longitudinal axis. The light beam 212 travels between a target location 216 on the substrate 116 and enters or exits the transparent rod 202 via a side surface 214 of the second end 210 that is proximate to angled end face 204. In at least one embodiment, the angle of the angled end face 204 relative to the longitudinal axis of the elongated body 206 is about 45°, such that the light beam is redirected at an angle which is orthogonal to the longitudinal axis of the elongated body 206 (i.e., with a reflection that is about 90°).

In at least some embodiments, the transparent rod 202 has a rotation such that the angled end face 204 is oriented to reflect the light beam 212 such that the light beam 212 reaches or is reflected or thermally emitted from the target location with a non-zero angle of incidence. In the illustrated embodiment, the transparent rod 202 has a rotation such that the light beam 212 reaches or is reflected or thermally emitted from the target location 216 with an angle of incidence of about 45°.

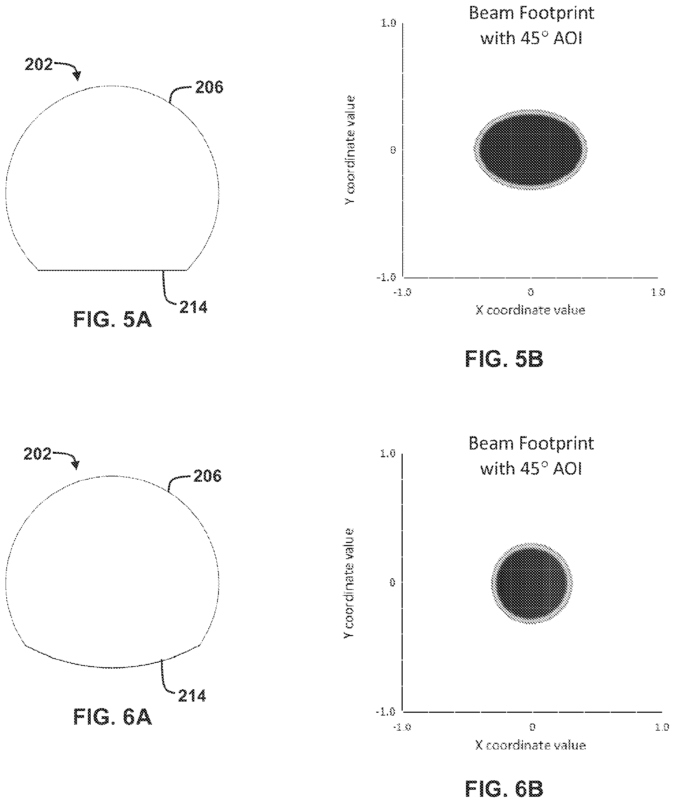

In at least some embodiments, a portion of the outer surface the elongated body 206, in particular the side surface 214 from which that the light beam 212 exits or enters the transparent rod 202, has a different shape or radius of curvature than the rest of the outer surface of the body 206. Particularly, FIG. 5A shows a cross-section of one variation of the transparent 202 at a section including the side surface 214 from which that the light beam 212 exits or enters the transparent rod 202. As can be seen, the side surface 214 is essentially flat, whereas the rest of the outer surface of the body 206 at this section of the transparent rod 202 is essentially circular. However, due to the angle of incidence of the light beam (e.g., about 45°), the light beam has a footprint that is elongated in one direction so as to be elliptical. FIG. 5B shows an exemplary elliptical beam footprint that may occur with the transparent rod 202 having a cross-section according to FIG. 5A at a non-zero angle of incidence (e.g., about 45°).

In a further embodiment, a portion of the outer surface the elongated body 206, in particular the side surface 214 from which that the light beam 212 exits or enters the transparent rod 202, has a radius of curvature that is configured to partially focus the light beam in the plane of incidence, thereby circularizing the beam footprint for a non-zero angle of incidence. Particularly, FIG. 6A shows a cross-section of another variation of the transparent 202 at a section including the side surface 214 from which that the light beam 212 exits or enters the transparent rod 202. As can be seen, the side surface 214 is radius of curvature that is different (e.g., larger) than the rest of the outer surface of the body 206 at this section of the transparent rod 202. The radius of curvature configured to shape the light beam such that the light beam has a circular beam footprint at the target location with a particular non-zero angle of incidence (e.g., about 45°). FIG. 6B shows an exemplary circularized beam footprint that may occur with the transparent rod 202 having a cross-section according to FIG. 6A at a non-zero angle of incidence (e.g., about 45°).

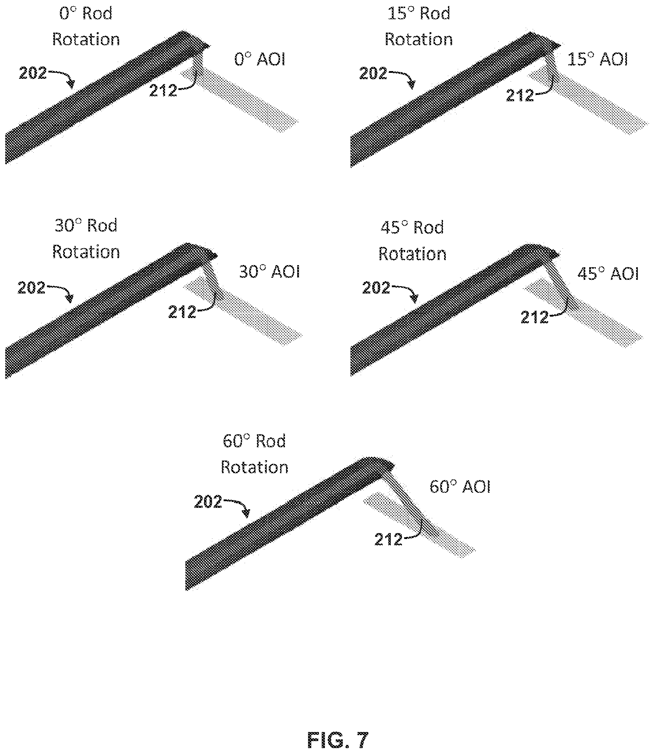

With reference to FIG. 7, the transparent rod 202 can be rotated about its longitudinal axis to adjust the angle of incidence of the light beam 212 with the target location. Particularly, it should be appreciated that the angle of incidence is the same as the rotation angle of the transparent rod 202 about its longitudinal axis (where a 0° rotation corresponds to a rotation at which a normal of the side surface 214 is parallel to a normal of the substrate 116 and/or of the platen 128). FIG. 7 shows the transparent rod 202 having a 45° angled end face with different rotations resulting in different angles of incidence of the light beam 212 with a respective target location. In the top-left diagram, a 0° rotation of the transparent rod 202 is shown, which results in a 0° angle of incidence (AOI) with the target location. In the top-right diagram, a 15° rotation of the transparent rod 202 is shown, which results in a 15° angle of incidence (AOI) with the target location. In the middle-left diagram, a 30° rotation of the transparent rod 202 is shown, which results in a 30° angle of incidence (AOI) with the target location. In the middle-right diagram, a 45° rotation of the transparent rod 202 is shown, which results in a 45° angle of incidence (AOI) with the target location. In the bottom diagram, a 60° rotation of the transparent rod 202 is shown, which results in a 60° angle of incidence (AOI) with the target location. As can be seen, as the transparent rod 202 is rotated, the angle of incidence is adjusted proportionally and the relative position of the target location moves along a linear path.

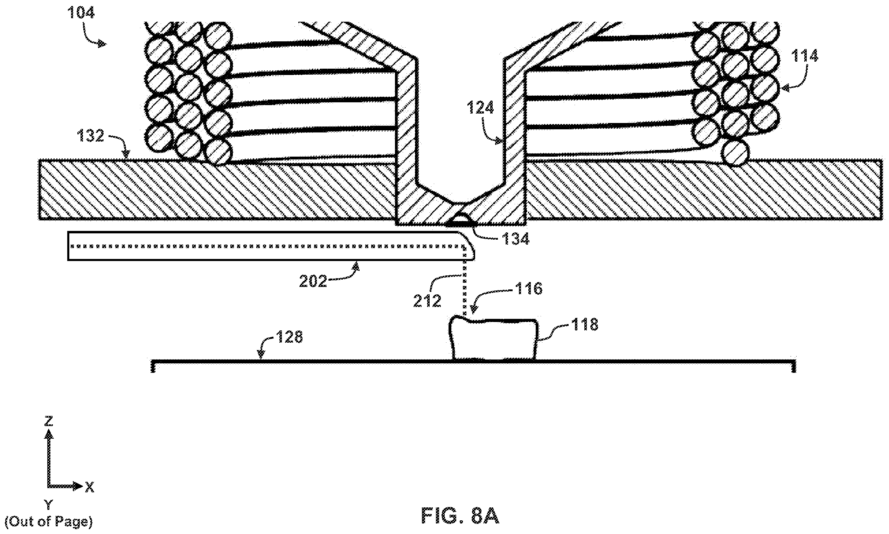

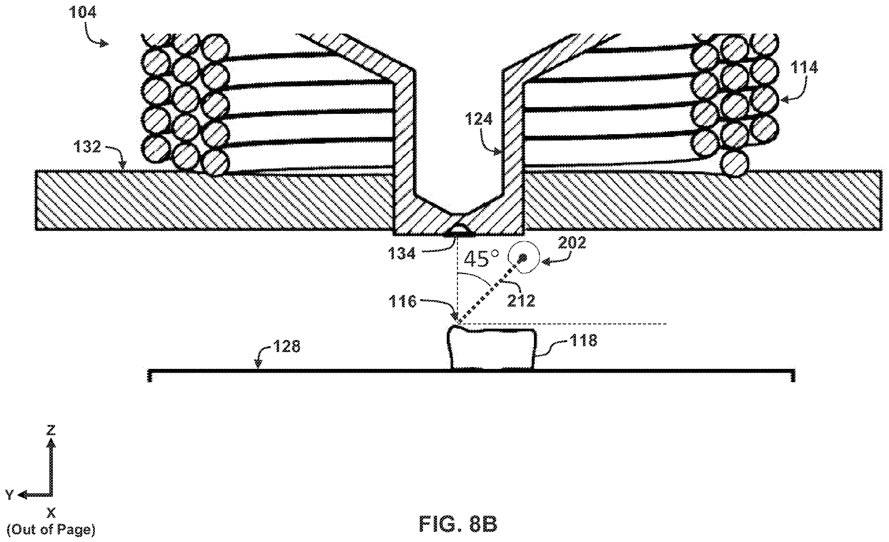

FIGs. 8A and 8B show a first exemplary embodiment of the 3D object printer 100 that incorporates the transparent rod 202 having the angled end face 204. As illustrated, the transparent rod 202 is arranged in the Z-direction between the platen 128 and the heat shield 132. However, as will be discussed in greater detail below, in some embodiments, the transparent rod 202 is instead embedded into the heat shield 132 or another component of the ejector head 104. In at least some embodiments, if not embedded within a component of the ejector head 104, the transparent rod 202 is attached to and/or mounted to the ejector head 104 such that the transparent rod 202 has a fixed position relative to the ejector head 104 and moves with the ejector head 104. In any case, the transparent rod 202 is arranged with its longitudinal axis substantially parallel to the top surface of the platen 128.

In the illustrated embodiment, the target location of the light beam 212 is a location at or near where the molten metal droplets are deposited and is accordingly, in alignment with the orifice 134 of the nozzle 124 in the X-direction and Y-direction and located at a predetermined distance from the orifice 134 in the Z-direction. Accordingly, as shown in FIG. 8A, the transparent rod 202 is positioned in the X-direction such that location on the side surface 214 from which the light beam 212 exits or enters the transparent rod 202 is aligned with the orifice 134 of the nozzle 124, or otherwise such that the light beam 212 is directed toward or received from the target location on or proximate to the substrate 116. Additionally, as shown in FIG. 8B, the transparent rod 202 is positioned in the Y-direction such that the longitudinal axis of the transparent rod 202 is offset from the orifice 134 of the nozzle 124 by a predefined distance. The Y-offset of the transparent rod 202 from the orifice 134 of the nozzle 124 advantageously keeps the transparent rod 202 from interfering with the ejection of molten metal droplets toward the substrate 116. It will be appreciated that the distance of the Y-offset of the transparent rod 202 of depends on the angle of incidence (e.g., 45°) of the light beam 212 and on the distance between the transparent rod 202 in the Z-direction from the target location on or proximate to the substrate 116. As discussed above the angle of incidence itself depends on rotation of the transparent rod 202.

Although not illustrated in the FIGs. 8A and 8B, it should be appreciated that a first end of the transparent rod 202 is suitably coupled with at least one optical device, such as the laser 144 of the laser heating system 102, the optical illuminator 146 of the optical monitoring system 130, or the optical sensor 148 of the optical monitoring system 130, so as to receive or provide the light beam 212. The coupling of optical devices with the structures of the optical systems is described in greater detail below.

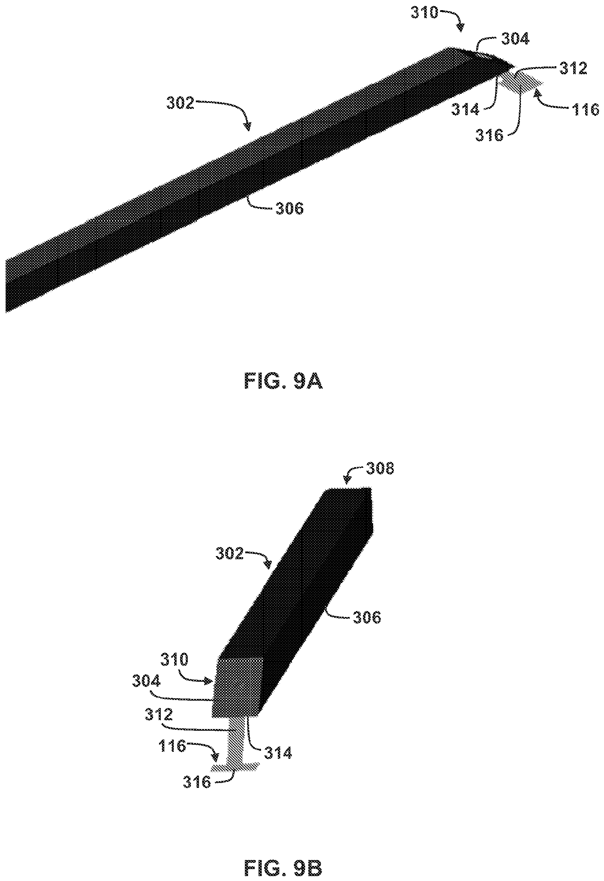

FIGs. 9A and 9B show an exemplary transparent rod 302 having an angled end face 304, which is similar but different than the transparent rod 202. The transparent rod 302 has an elongated body 306 with a first end 308 and a second end 310. The body 306 is composed of a transparent material such as quartz, glass, a polymer, or a plastic. Regardless of the particular material, the body 306 is should be capable of being subjected to high temperatures without damage. In the illustrated embodiment, the body 306 has a cross-section that is at least partially squared and/or rectangular. However, in other embodiments, the body 306 may have a variety of different cross-sectional shapes.

The first end 308 of the body 306 receives a light beam 312 from the optical device 160 and/or provides the light beam 312 to the optical device 160 (not shown). The second end 306 has an angled end face 304 with an angle relative to the longitudinal axis of the elongated body 306. The angle of the angled end face 304 is configured to cause a total internal reflection (TIR) of the light beam 312 such that the light beam 312 is redirected with respect to the longitudinal axis. The light beam 312 travels between a target location 316 on the substrate 116 and enters or exits the transparent rod 302 via a side surface 314 of the second end 310 that is proximate to angled end face 304.

However, in at least one embodiment, in contrast to the transparent rod 202 discussed above, the angle of the angled end face 304 relative to the longitudinal axis of the elongated body 306 is less than about 45° (e.g., about 30°), such that the light beam 312 is redirected at an angle which is non-orthogonal to the longitudinal axis of the elongated body 306 (i.e., with a reflection that less than about 90°). In at least one embodiment, the light beam 312 is redirected at an angle which is obtuse with respect to a direction of travel of the light beam 312 within the elongated body 306. As a result of the obtuse reflection angle, the light beam 312 exits or enters the body 306 through the side surface 314 of the second end 310 with a non-zero angle of incidence with the side surface 314. Accordingly, the light beam 312 is refracted as it exits or enters the transparent rod 302. Since the refractive index of the material of the body 306 is generally greater than that of the surrounding air, the refraction of the light beam is generally such that the angle of the light beam 312 becomes closer to parallel to the longitudinal axis of the transparent rod 302. In this way, the angle of incidence of the light beam 312 with the target location 316 on or proximate to the substrate 116 depends on the angle of the angle of the angled end face 304, as well as the refractive index of the material of the body 306. This is in contrast with the transparent rod 202 discussed above, which achieves a non-zero angle of incidence by rotation of the transparent rod 202. In the illustrated embodiment, the angle of the angled end face 304 and the refractive index of the material of the body 306 are such that the light beam 312 reaches or is reflected or thermally emitted from the target location 316 with an angle of incidence of about 45°.

In at least some embodiments, a portion of the outer surface the elongated body 306, in particular the side surface 314 from which that the light beam 312 exits or enters the transparent rod 302, has a different shape or radius of curvature than the rest of the outer surface of the body 306. Particularly, the side surface 314 may be shaped in such a manner as to shape the light beam 312 to have a circular beam footprint at the target location with a particular non-zero angle of incidence (e.g., about 45°).

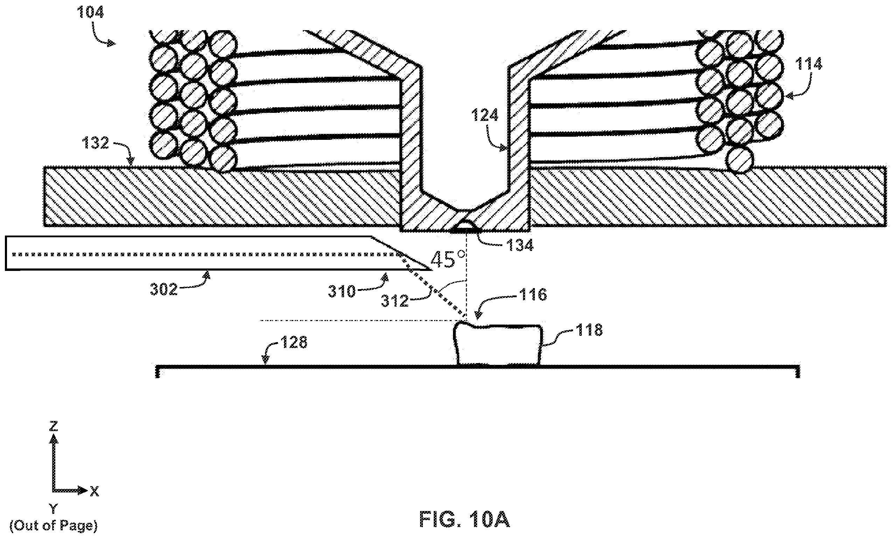

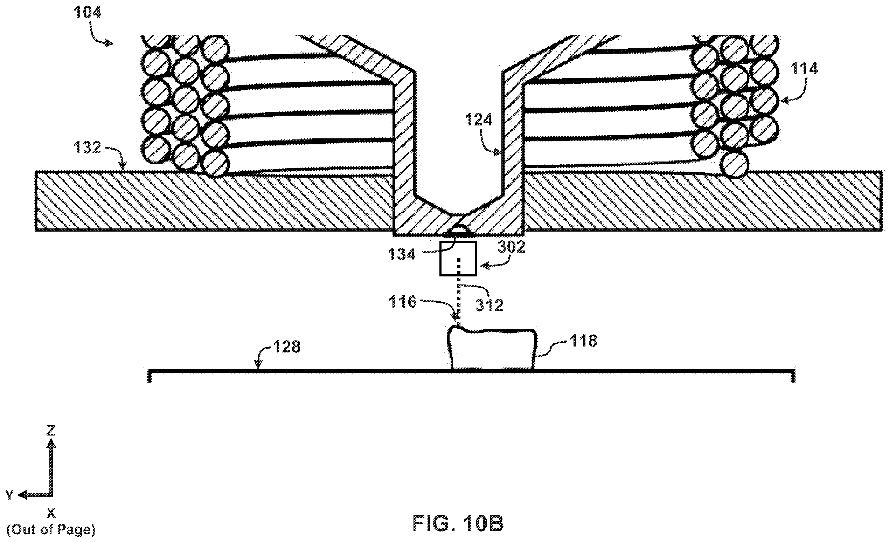

FIGs. 10A and 10B show a second exemplary embodiment of the 3D object printer 100 that incorporates the transparent rod 302 having the angled end face 304. As illustrated, the transparent rod 302 is arranged in the Z-direction between the platen 128 and the heat shield 132. However, as will be discussed in greater detail below, in some embodiments, the transparent rod 302 is instead embedded into the heat shield 132 or another component of the ejector head 104. In at least some embodiments, if not embedded within a component of the ejector head 104, the transparent rod 302 is attached to and/or mounted to the ejector head 104 such that the transparent rod 302 has a fixed position relative to the ejector head 104 and moves with the ejector head 104. In any case, the transparent rod 302 is arranged with its longitudinal axis substantially parallel to the top surface of the platen 128.

As in other illustrated embodiments, the target location of the light beam 312 is in alignment with the orifice 134 of the nozzle 124 in the X-direction and Y-direction and located at a predetermined distance from the orifice 134 in the Z-direction. Thus, as shown in FIG. 10A, the transparent rod 302 is positioned in the X-direction such that the entire transparent rod 302 is offset from the orifice 134 of the nozzle 124 or, in other words, such that there is no overlap between length of the transparent rod 302 and the X position of the orifice 134 of the nozzle 124. More particularly, the second end 310 of the transparent rod 302 is offset from the orifice 134 of the nozzle 124 by a predefined distance such that the light beam 312 is directed toward or received from the target location on or proximate to the substrate 116. Additionally, as shown in FIG. 10B, the transparent rod 302 is positioned in the Y-direction such that the longitudinal axis is aligned with the orifice 134 of the nozzle 124 in the Y direction. The X-offset of the transparent rod 302 from the orifice 134 of the nozzle 124 advantageously keeps the transparent rod 302 from interfering with the ejection of molten metal droplets toward the substrate 116. It will be appreciated that the distance of the X-offset of the transparent rod 302 of depends on the angle of incidence (e.g., 45°) of the light beam 312 and on the distance between the transparent rod 302 in the Z-direction from the target location on or proximate to the substrate 116. As discussed above the angle of incidence itself depends on the angle of the angled end face and on the refractive index of the material of the body of transparent rod 302.

Although not illustrated in the FIGs. 10A and 10B, it should be appreciated that a first end of the transparent rod 302 is suitably coupled with at least one optical device, such as the laser 144 of the laser heating system 102, the optical illuminator 146 of the optical monitoring system 130, or the optical sensor 148 of the optical monitoring system 130, so as to receive or provide the light beam 312. The coupling of optical devices with the structures of the optical systems is described in greater detail below.

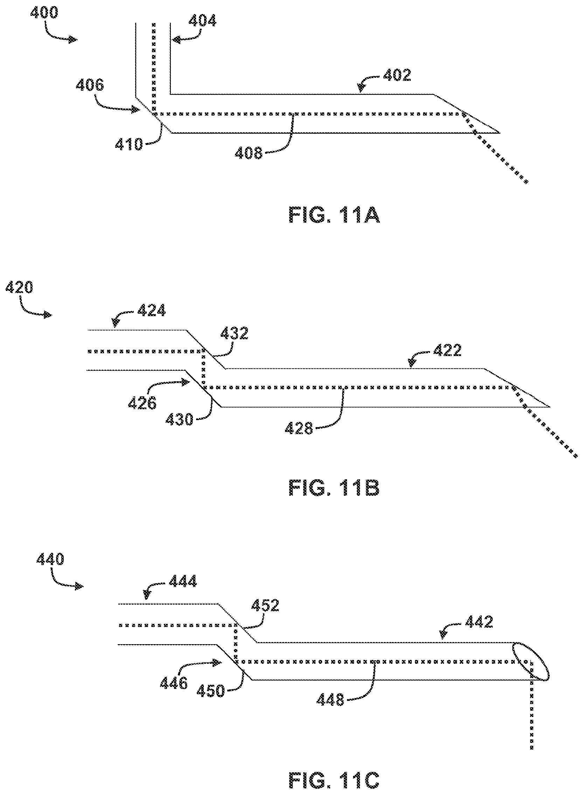

In some embodiments, the optical system of the laser heating system 202 includes multiple transparent rods that are optically and mechanically connected together with one or more transparent joints. Each transparent j oint of the optical system has body that includes at least one angled surface configured cause at least one total internal reflection (TIR) of the light beam within transparent joint that redirects the light beam from an end of a transparent rod to an end of another transparent rod that is arranged at a different angle or direction. It should be appreciated that the multiplicity of transparent rods and transparent joints can be manufactured together as a single part or subsequently joined together using a suitable technique. With reference to FIGs. 11A, 11B, and 11C, exemplary embodiments of optical systems having multiple transparent rods are described below.

FIG. 11A shows a first exemplary optical system 400 having a first transparent rod 402, which is similar in form to the transparent rod 302, and a second transparent rod 404, which is also similar in form to the transparent rod 302 except it lacks an angled end face. A transparent joint 406 optically and mechanically connects the transparent rod 404 with the transparent rod 402. The transparent joint 406 is composed of a transparent material such as quartz, glass, a polymer, or a plastic. Regardless of the particular material, the transparent joint 406 should be capable of being subjected to high temperatures without damage. The transparent joint 406 includes an angled surface 410 that has an angle with respect to the longitudinal axes of the transparent rods 402, 404, which is configured to cause a total internal reflection of a light beam 408 that redirects the light beam 408 between the second transparent rod 404 and the first transparent rod 402. Particularly, the second transparent rod 404 is configured to receive or provide the light beam 408 at a first end (not shown) and the light beam 408 travels in a longitudinal axial direction of the second transparent rod 404 to a second end thereof. The transparent joint 406 is configured to receive the light beam 408 from one of the transparent rods 402, 404, reflect the light beam 408 with the angled surface 410, and provide the light beam 408 to the other one of the transparent rods 402, 404. The light beam 408 travels through the first transparent rod 402 in the same manner discussed above with respect to the transparent rod 302.

FIG. 11B shows a second exemplary optical system 420 having a first transparent rod 422, which is similar in form to the transparent rod 302, and a second transparent rod 424, which is also similar in form to the transparent rod 302 except it lacks an angled end face. A transparent joint 426, which essentially similar to the transparent joint 406, optically and mechanically connects the transparent rod 424 with the transparent rod 422. The transparent joint 426 includes a first angled surface 430 and a second angled surface 432 that have angles with respect to one another and with respect to the longitudinal axes of the transparent rods 422, 424, which are configured to cause total internal reflections of a light beam 428 that redirect the light beam 428 between the transparent rod 424 and the first transparent rod 422. Particularly, in a similar manner as described with respect to the embodiment of FIG. 11A, the transparent joint 426 is configured to receive the light beam 428 from one of the transparent rods 422, 424, reflect the light beam 428 with the angled surface 430, reflect the light beam 428 with the angled surface 432, and provide the light beam 428 to the other of the transparent rods 422, 424.

FIG. 11C shows a third exemplary optical system 440 having a first transparent rod 442, which is similar in form to the transparent rod 202, and a second transparent rod 444, which is also similar in form to the transparent rod 202 except it lacks an angled end face. A transparent joint 446, which essentially similar to the transparent joint 426, optically and mechanically connects the transparent rod 444 with the transparent rod 442. The transparent joint 446 includes a first angled surface 450 and a second angled surface 452 that have angles with respect to one another and with respect to the longitudinal axes of the transparent rods 442, 444, which are configured to cause total internal reflections of a light beam 448 that redirect the light beam 448 between the transparent rod 444 and the first transparent rod 442, in an essentially similar manner as described with respect to the embodiment of FIG. 11B.

By way of the above examples, it should be understood that an arbitrary number of transparent rods and transparent joints of various configurations can be combined to operate as a light guide that navigates light beam(s), such as laser beams, illumination beams, reflected light beams, thermal radiation, etc., as necessary according the structural and spatial constraints of the 3D object printer 100. In some embodiments, the transparent rods of the optical system can be configured to periscope through the other structures of the 3D object print 100 (e.g., periscope through the heat shield 132 via small vertical opening).

In at least some embodiments, the optical system of the laser heating system 102 includes at least one reflective rod via which the light beam is reflected. In general, the reflective rod has a first end with an angled end face, which has a reflective coating or is otherwise composed of a reflective material. The optical device 160 is arranged or the light beam thereof is directed such that the light beam is output toward the angled end face of the reflective rod. The light beam is reflected by the angled end face of the reflective rod to, thereby, redirect the light beam toward a target location on or proximate to the substrate 116. In at least some embodiments, the angle of the angled end face relative to a longitudinal axis of the reflective rod is about 45 degrees, such that the light beam is reflected at an angle which is orthogonal to a longitudinal axis of the reflective rod when the light beam travels parallel to or colinear with the longitudinal axis to reach the angled end face.

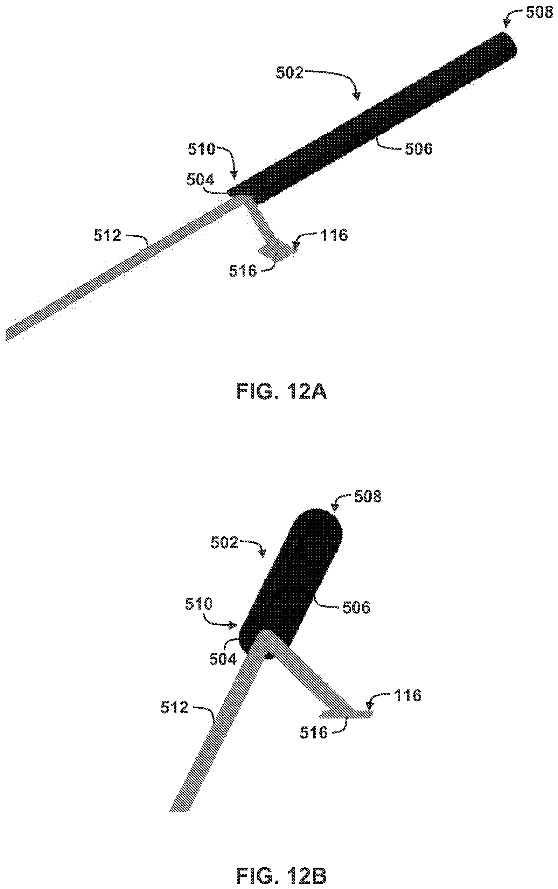

FIGs. 12A and 12B show an exemplary reflective rod 502 having an angled end face 504. The transparent rod 502 has an essentially cylindrical elongated body 506 with a first end 508 and a second end 510. In the illustrated embodiment, the body 506 has a cross-section that is at least partially circular and/or elliptical. However, in other embodiments, the body 506 may have a variety of different cross-sectional shapes. The second end 510 has an angled end face 504 with an angle relative to the longitudinal axis of the elongated body 506. The angled end face 504 has a reflective coating (e.g., a reflective metallic or dielectric coating) or is composed of a reflective material (e.g., a reflective metal or dielectric material). The body 506 is composed of any suitable material that may or may not also be reflective. In the case of a reflective coating on the angled end face 504, the material of the body 506 is selected so as to maintain a good bond with the reflective coating at high temperatures. Regardless of the particular materials, the body 506 and the angled end face 504 and/or the reflective coating thereof should be capable of being subjected to high temperatures without damage.

The angle of the angled end face 504 is configured to reflect a light beam 512 such that the light beam 512 is redirected toward or received from a target location 516 on the substrate 116. In at least one embodiment, the angle of the angled end face 504 relative to the longitudinal axis of the elongated body 506 is about 45°, such that the light beam 512 is reflected between an optical path that is orthogonal to the longitudinal axis of the elongated body 506 and an optical path that is parallel to or colinear with the longitudinal axis to reach the angled end face 516 (i.e., a reflection that is about 90°).

In at least some embodiments, the reflective rod 502 has a rotation such that the angled end face 504 is oriented to reflect the light beam 512 such that the light beam 512 reaches or is reflected from the target location with a non-zero angle of incidence. In the illustrated embodiment, the reflective rod 502 has a rotation such that the light beam 512 reaches or is reflected from the target location 516 with an angle of incidence of about 45°.

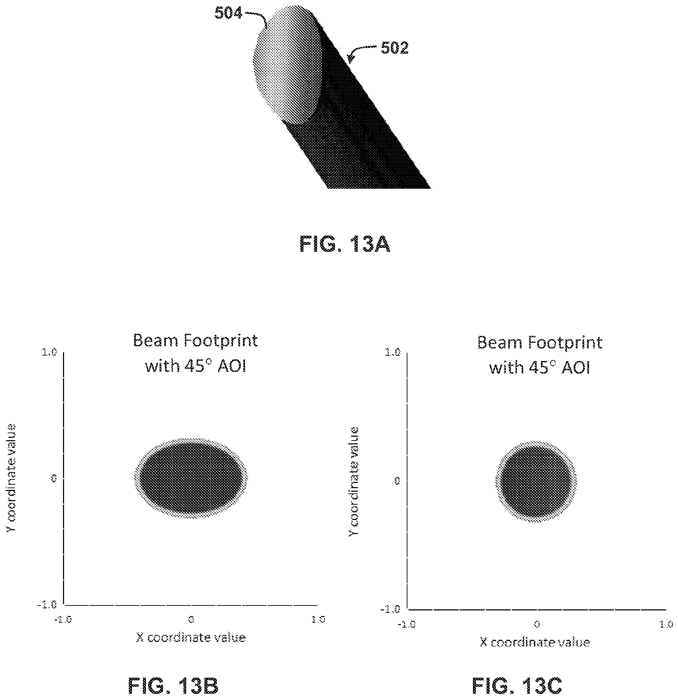

In at least some embodiments, angled end face 504 may have shape or radius of curvature that is configured to shape the light beam 512 to have a circular beam footprint at the target location with a particular non-zero angle of incidence (e.g., about 45°), in a similar manner as discussed above with respect to FIGs. 6A and 6B. Particularly, FIG. 13A shows a variation of the reflective rod 502 in which the angled end face 504 has a cylindrical concaved shape that is configured to partially focus the light beam in the plane of incidence, thereby circularizing the beam footprint for a non-zero angle of incidence. FIG. 13B shows an exemplary beam footprint that may occur with the reflective rod 502 having a flat angled end face 504 at a non-zero angle of incidence (e.g., about 45°). As can be seen, the beam footprint has an elliptical shape. In contrast, FIG. 13C shows an exemplary circularized beam footprint that may occur with the reflective rod 504 having the cylindrically concaved angled end face 504 according to FIG. 13A at a non-zero angle of incidence (e.g., about 45°).

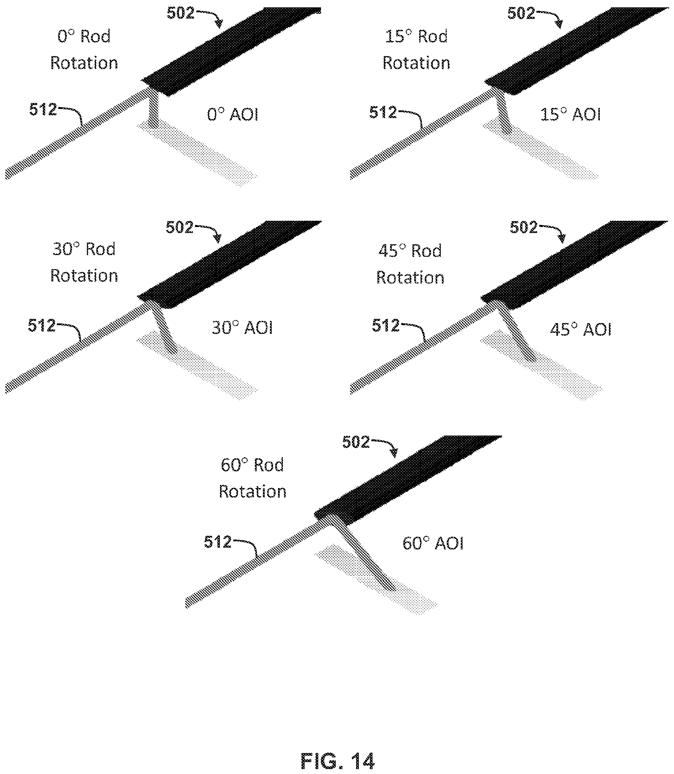

With reference to FIG. 14, similar to the transparent rod 202, the reflective rod 502 can be rotated about its longitudinal axis to adjust the angle of incidence of the light beam 512. Particularly, it should be appreciated that the angle of incidence is the same as the rotation angle of the reflective rod 502 about its longitudinal axis (where a 0° rotation corresponds to a rotation at which a normal vector of the angled end face 504 is co-planar with a normal vector of the substrate 116 and/or of the platen 128 and is pointed in a direction of the platen 128). FIG. 14 shows the reflective rod 502 having a 45° angled end face with different rotations resulting in different angles of incidence of the light beam 512 with a respective target location. In the top-left diagram, a 0° rotation of the reflective rod 502 is shown, which results in a 0° angle of incidence (AOI) with the target location. In the top-right diagram, a 15° rotation of the reflective rod 502 is shown, which results in a 15° angle of incidence (AOI) with the target location. In the middle-left diagram, a 30° rotation of the reflective rod 502 is shown, which results in a 30° angle of incidence (AOI) with the target location. In the middle-right diagram, a 45° rotation of the reflective rod 502 is shown, which results in a 45° angle of incidence (AOI) with the target location. In the bottom diagram, a 60° rotation of the reflective rod 502 is shown, which results in a 60° angle of incidence (AOI) with the target location. As can be seen, as the reflective rod 502 is rotated, the angle of incidence is adjusted proportionally and the relative position of the target location moves along a linear path.

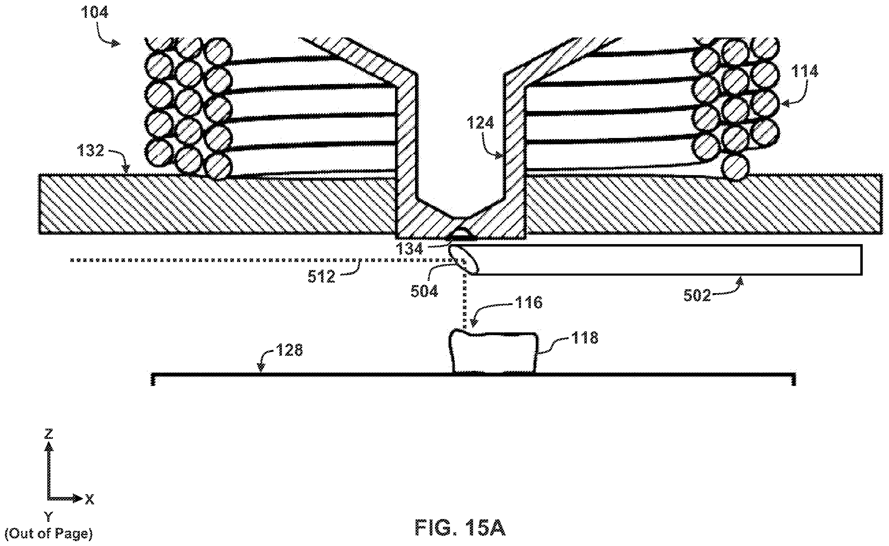

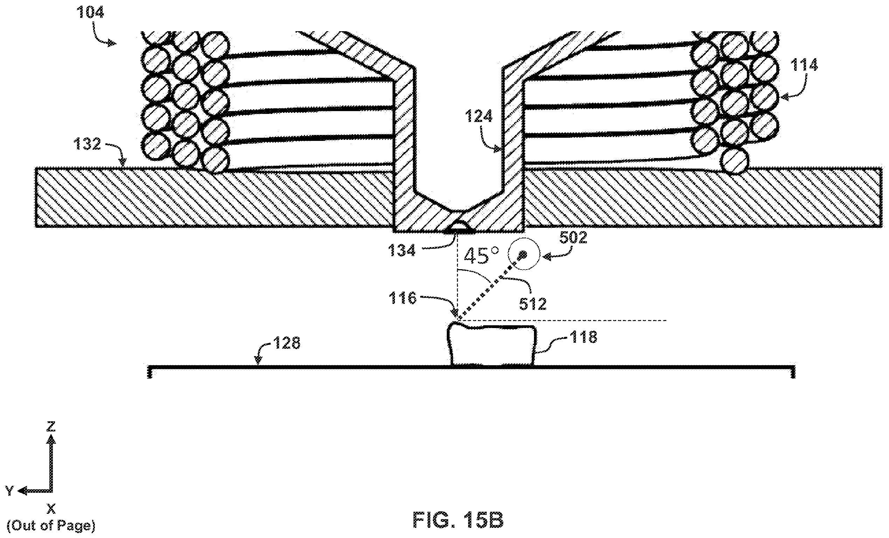

FIGs. 15A and 15B show a third exemplary embodiment of the 3D object printer 100 that incorporates the reflective rod 502 having an angled end face 204. As illustrated, the reflective rod 502 is arranged in the Z-direction between the platen 128 and the heat shield 132. However, as will be discussed in greater detail below, in some embodiments, the reflective rod 502 is instead embedded into the heat shield 132 or another component of the ejector head 104. In at least some embodiments, if not embedded within a component of the ejector head 104, the reflective rod 502 is attached to and/or mounted to the ejector head 104 such that the reflective rod 502 has a fixed position relative to the ejector head 104 and moves with the ejector head 104. In any case, the reflective rod 502 is arranged with its longitudinal axis substantially parallel to the top surface of the platen 128. In at least one embodiment, the light beam is output toward or reflected from the angled end face 504 by the laser (not shown) in along an optical path that is parallel and/or colinear with the longitudinal axis of the reflective rod 502.

As in other illustrated embodiments, the target location of the light beam 312 is in alignment with the orifice 134 of the nozzle 124 in the X-direction and Y-direction and located at a predetermined distance from the orifice 134 in the Z-direction. Thus, as shown in FIG. 15A, the reflective rod 502 is positioned in the X-direction such that the angled end face 504 is aligned with the orifice 134 of the nozzle 124, or otherwise such that the light beam 512 is directed toward or received from the target location on or proximate to the substrate 116. Additionally, as shown in FIG. 15B, the reflective rod 502 is positioned in the Y-direction such that the longitudinal axis of the reflective rod 502 is offset from the orifice 134 of the nozzle 124 by a predefined distance. The Y-offset of the reflective rod 502 from the orifice 134 of the nozzle 124 advantageously keeps the reflective rod 502 from interfering with the ejection of molten metal droplets toward the substrate 116. It will be appreciated that the distance of the Y-offset of the reflective rod 502 of depends on the angle of incidence (e.g., 45°) of the light beam 212 and on the distance between the reflective rod 502 in the Z-direction from the target location on or proximate to the substrate 116.

Although not illustrated in the FIGs. 15A and 15B, it should be appreciated that a first end of the reflective rod 502 is suitably arranged with respect to at least one optical device, such as the laser 144 of the laser heating system 102, the optical illuminator 146 of the optical monitoring system 130, or the optical sensor 148 of the optical monitoring system 130, so as to receive or provide the light beam 512. The coupling of optical devices with the structures of the optical systems is described in greater detail below.

As noted above, in at least some embodiments, the structures of the optical system are at least partially embedded within a component of the ejector head 104 or within any other component of the 3D object printer 100. Particularly, contamination of the structures of the optical system is often a concern with designing the 3D object printer 100. The surfaces of the structures of the optical system could be exposed to ejected metal droplets, ejected metal satellites, metal splattering from build part and metal sputtering, or metal evaporation from build part 118.

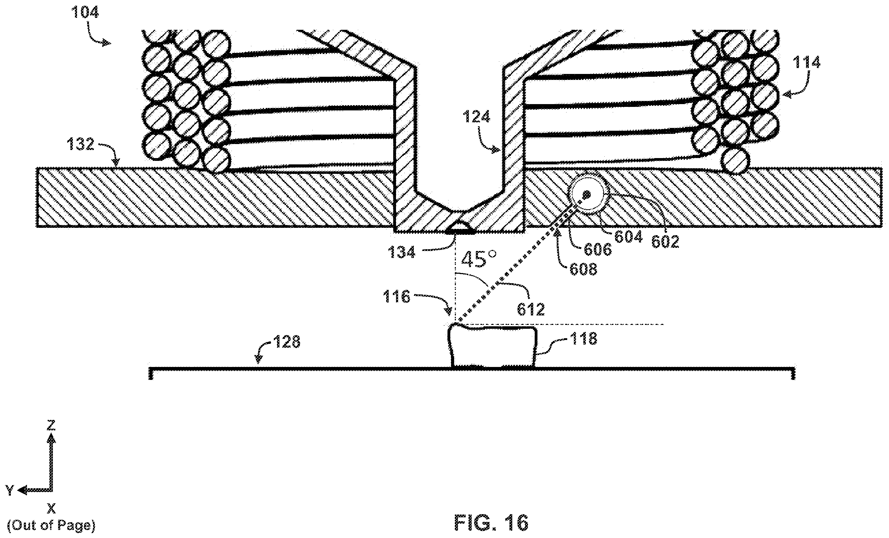

FIG. 16 shows a fourth exemplary embodiment of the 3D object printer 100 that incorporates a rod 602 of the optical system embedded within the heat shield 132. In the illustrated embodiment, the rod 602 has a circular cross-section, similar the transparent rod 202 and the reflective rod 502, but the rod 602 may correspond to any of the rods discusses herein including the transparent rod 202, the transparent rod 302, the transparent rods 402, 404 of the optical system 400, the transparent rods 422, 424 of the optical system 420, transparent rods 442, 444 of the optical system 440, the reflective rod 502, or any other structure of the optical system of the laser heating system 102.

The rod 602 is embedded within the heat shield 132 by way of a bore 604 or channel that is drilled or otherwise defined in the heat shield 132. The bore 604 is suitably dimensioned and shaped to accommodate the body of the rod 602. In embodiments having multiple rods, multiple bores or other corresponding voids are defined in the heat shield 132 and/or other components of the ejector head 104 to accommodate each component of the optical system.

In the embodiments in which the rod 602 is a transparent rod, a light beam 612 exits or enters the rod 602 from a side surface, in the same manner discussed above with respect to the transparent rod 202 and the transparent rod 302. A narrow bore 606 or channel is drilled or otherwise defined in the heat shield 132 to connect the bore 604 with an opening 608 defined in a bottom surface of the heat shield 132 that faces the platen 128. The light beam 612 travels from the side surface of the rod 602 via the narrow bore 606, exits or enters the heat shield 132, and travels toward the target location on or proximate to the substrate 116.

Similarly, in embodiments in which the rod 602 is a reflective rod, the laser (not shown) is arranged to output the light beam 612 through the bore 604 toward the reflective angled end face of the rod 602 or receive the light beam 612 from the reflective angled end face via the bore 604. The light beam 612 is reflected by the reflective angled end face of the rod 602, in the same manner discussed above with respect to the reflective rod 502. The light beam 612 travels between reflective angled end face of the rod 602 and the target location on or proximate to the substrate 116 via the narrow bore 606. In this way, the rod 602 and any other structures of the optical system are protected from exposure to metal contamination.

The narrow bore 606 is sized to accommodate the width of the light beam 612 and is angled to accommodate the angle at which the light beam 612 travels between the rod 602 and the target location on or proximate to the substrate 116. In general, the narrow bore 606 is sized to provide some tolerance with respect to the angle, alignment, and size of the light beam 612. However, in a practical implementation, mechanical adjustments may be required to compensate for fabrication and assembly tolerances and accurately orient the rod 602 with respect to the target location.

In one embodiment, in order to accommodate such mechanical adjustments, the laser heating system 102 includes one or more actuators (not shown) configured to rotate the rod 602 within the bore, or reposition the rod 602 longitudinally within the bore 604. These actuators can be operated manually by hand or controlled electronically by the computing system 108. By adjusting the rod 602 axially and/or longitudinally, the actuator(s) provide mechanical degrees of freedom to accurately orient the rod 602 with respect to the target location, even in the presence of fabrication and assembly tolerances.

### Optical Device Coupling

As mentioned above, an optical device, such as the laser 144 of the laser heating system 102, the optical illuminator 146 of the optical monitoring system 130, or the optical sensor 148 of the optical monitoring system 130, is suitable coupled with or arranged with respect to the structures of the optical systems as necessary to project light into the fabrication environment or receive light reflected or thermally emitted from the fabrication environment. In some embodiments, the optical devices are coupled with the structures of the optical systems with one or more of a collimator, beam expansion optics, a focusing lens, an optical isolator, and folding optics. Below, several arrangements are described for coupling a light source, such as the laser 144 or the optical illuminator 146, with various optical systems and structures. However, it will be appreciated by those of skill in the art that essentially similar arrangements can be utilized to couple a light receiver, such as the optical sensor 148, with the various optical systems and structures.

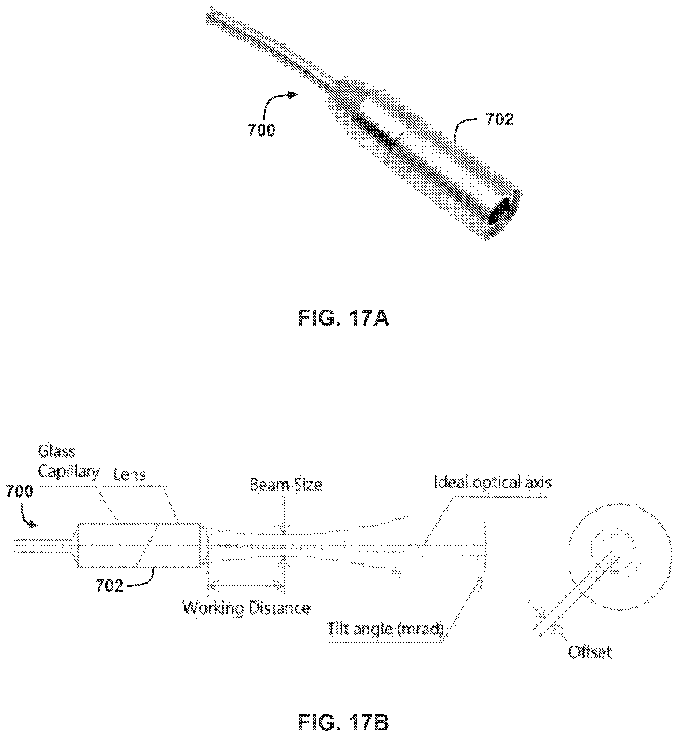

FIG. 17A shows an exemplary light source 700 having a collimator 702 configured to collimate a light beam that is generated by the light source 700. The light source may, for example, be laser of the laser heating system 102 or an optical illuminator of the optical monitoring system 130. The collimator 702 is configured to convert a diverging light beam generated by the light source 700 into a parallel or collimated light beam. It should be appreciated that some collimators incorporate advanced technologies of direct fusion to a large beam expanding end cap ensuring safe power density, and a mode stripper that prevents burning the buffer/jacket by removing unwanted back-reflection radiation. These technologies significantly increase the collimator reliability. A fiber optical collimator is commonly characterized by its beam waist size, working distance, and off-axis tilting angle, as shown in FIG. 17B. For single-mode and multi-mode transmission, the performance of the collimator 702 intrinsically depends on the field distribution profile of the light source 700.

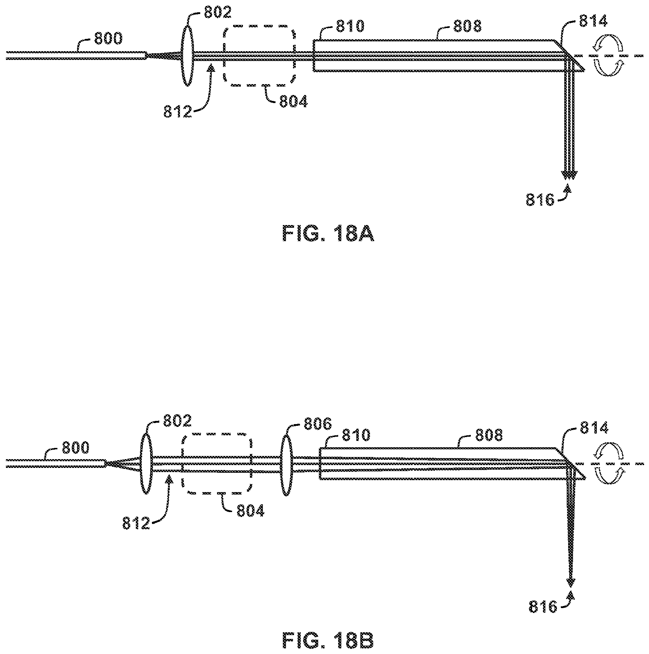

FIG. 18A shows a first arrangement for coupling a light source 800 with a transparent rod 808, which is essentially similar to the transparent rod 202. The light source 800 may correspond, for example, to the laser 144 of the laser heating system 102 or the optical illuminator 146 of the optical monitoring system 130. The light source 800 is coupled with a collimator 802. The collimator 802 is configured to convert diverging light generated by the light source 800 into a parallel or collimated light beam 812. In some embodiments, the collimator 802 may include additional beam expansion optics. In at least some embodiments, an output of the collimator 802 is coupled with an optical isolator and/or folding optics 804. The output of the optical isolator and/or folding optics 804 is provided directly to a first end 810 of the transparent rod 808. The collimated light beam 812 travels through the transparent rod 808 and is reflected by an angled end face 814 of the transparent rod 808 and is redirected toward a target location 816, in a similar manner as discussed above with respect to the transparent rod 202. It should be appreciated that the transparent rod 808 can be rotated, in a similar manner as discussed above with respect to the transparent rod 202, without changing the shape of the collimated light beam 812.

FIG. 18B shows a second arrangement for coupling the light source 800 with the transparent rod 808, in which a focusing lens 806 is arranged between the first end 810 of the transparent rod 808 and the output of the optical isolator and/or folding optics 804. The focusing lens 806 has a suitable focal length configured to focus the collimated light beam 812 such that the light beam 812 focuses on the target location 816.

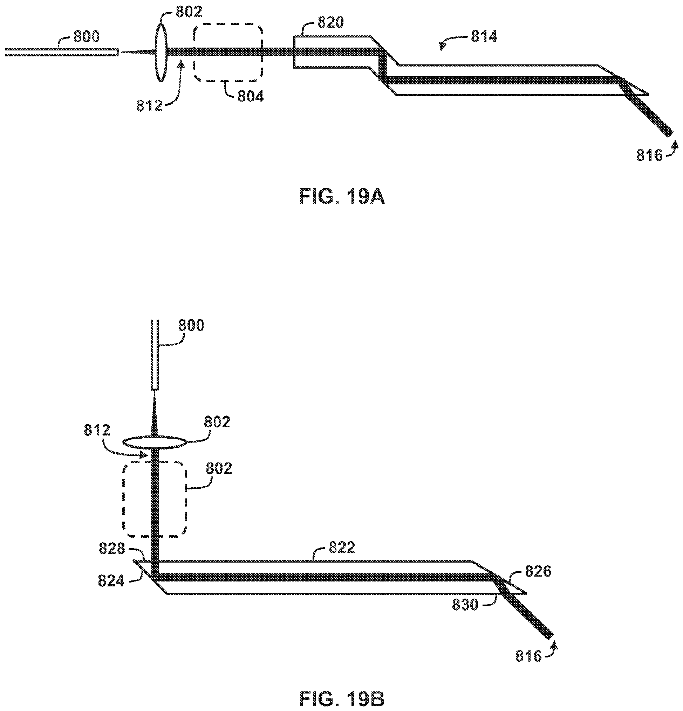

FIG. 19A shows a third arrangement for coupling the light source 800 with an optical system 818, which is essentially similar to the optical system 420 discussed above. The optical system 818 has multiple transparent rods that are optically and mechanically connected by way of transparent joints. The output of the optical isolator and/or folding optics 804 is provided directly to a first end 820 of the optical system 818. The optical system 818 guides the collimated light beam 812 and redirects it toward the target location 816.

FIG. 19B shows a fourth arrangement for coupling the light source 800 with a transparent rod 822. The transparent rod 822 has a first angled end face 822, which is essentially similar to the angled end face 204 of the transparent rod 202. Particularly, the first angled end face 822 has an angle that is about is about 45° relative to the longitudinal axis of the transparent rod 822, such that the light beam 812 is redirected at from angle which is orthogonal to the longitudinal axis to become parallel or colinear with the longitudinal axis (i.e., with a reflection that is about 90°). The transparent rod 822 also has a second angled end face 826, which is essentially similar to the angled end face 304 of the transparent rod 302. Particularly, the first angled end face 822 has an angle that is less than about 45° (e.g., about 30°) relative to the longitudinal axis the transparent rod 822, such that the light beam 812 is redirected at an angle which is non-orthogonal to the longitudinal axis of the elongated body of the transparent rod 822 (i.e., with a reflection that less than about 90°). The output of the optical isolator and/or folding optics 804 is provided directly to a side surface 828 of the first angled end face 822. The light beam 812 is redirected along the longitudinal axis of the transparent rod 822, and then obtusely reflected by the second angled end face 826. The light beam 812 exits a side surface 830 of the second angled end face 826 and is refracted toward the target location 816.

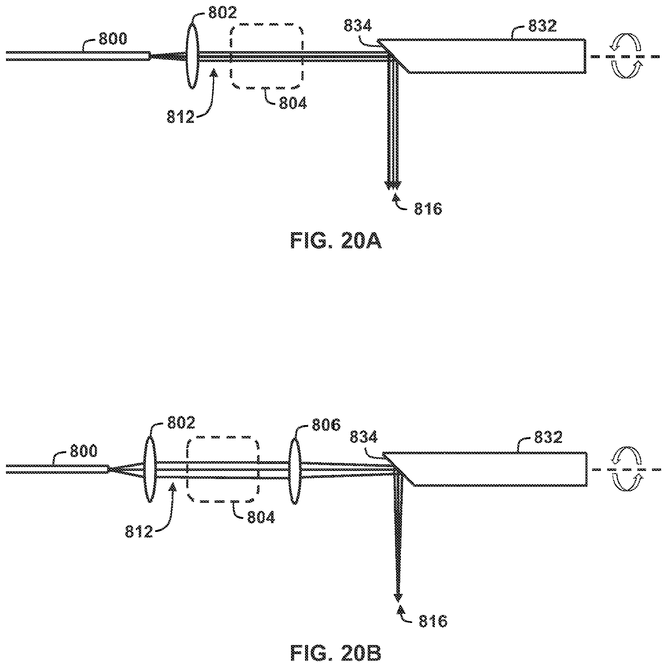

FIG. 20A shows a fifth arrangement for coupling the light source 800 with a reflective rod 832, which is essentially similar to the reflective rod 502. The output of the optical isolator and/or folding optics 804 is arranged to direct the light beam 812 along an optical path that is parallel to or colinear with the longitudinal axis of the reflective rod 832, toward an angled end face 834, which is essentially similar to the angled end face 504 of the reflective rod 502. The collimated light beam 812 is reflected by the angled end face 834 toward the target location 816. It should be appreciated that the reflective rod 832 can be rotated, in a similar manner as discussed above with respect to the reflective rod 502, without changing the shape of the collimated light beam 812.

FIG. 20B shows a sixth arrangement for coupling the light source 800 with the reflective rod 832, in which the focusing lens 806 is arranged between the angled end face 834 of the reflective rod 832 and the output of the optical isolator and/or folding optics 804. The focusing lens 806 has a suitable focal length configured to focus the collimated light beam 812 such that the light beam 812 focuses on the target location 816.

### Method for Fabricating a Part Using the 3D Object Printer

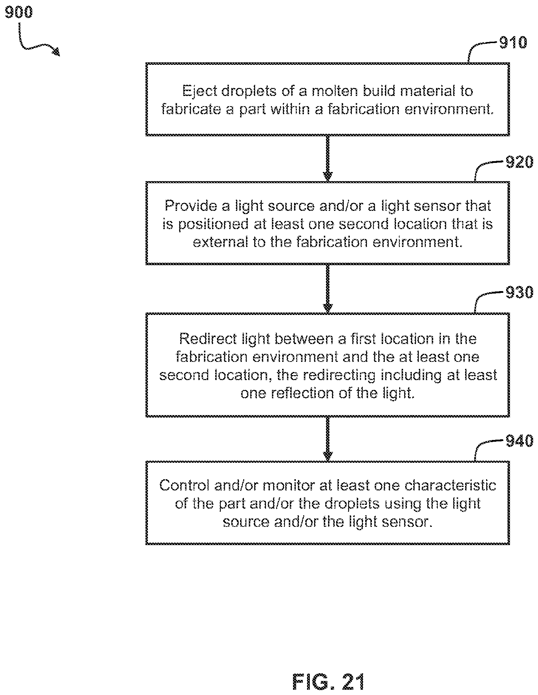

FIG. 21 shows a flow diagram for a method 900 for fabricating a part using an additive manufacturing device, such as the 3D object printer 100. It should be appreciated that the steps of the method may be performed in any feasible chronological order, regardless of the order shown in the figures or the order in which the steps are described.

The method 900 begins with ejecting droplets of a molten build material to fabricate a part within a fabrication environment (block 910). Particularly, the computing system 108 operates the actuator(s) 138 to position the orifice 134 of the nozzle 124 over the substrate 116 at a defined distance from in the Z-direction the substrate 116 (e.g., between 4mm and 8mm). Next, the computing system 108 operates the switches 142 to cause the nozzle 124 to eject molten metal droplets of onto the substrate 116 to begin forming the part 118. Simultaneously or sequentially with ejecting the molten metal droplets, the computing system 108 also operates the actuators 140 to move the platen 128 of the build platform 106 in the X-Y plane to, thereby, form swaths or layers of melted metal on the substrate 116 to form the part 118. As each layer of metal is deposited onto the substrate 116, the computing system 108 operates the actuator(s) 138 to maintain an appropriate distance in the Z-direction between the orifice 134 and the substrate 116. (e.g., between 4mm and 8mm). In alternate configurations, the computing system 108 may similarly move the ejector head 104 in the X-Y plane or move the move the platen 128 along the Z-axis.

Next, the method 900 continues with providing a light source and/or a light sensor that is positioned at at least one second location that is external to the fabrication environment (block 920). Particularly, the 3D object printer 100 is provided with one or both of the laser heating system 102 and the optical monitoring system 130. The laser heating system 102 includes at least one laser 144 configured to generate at least one laser beam. The optical monitoring system 130 includes at least one optical illuminator 146 configured to generate at least one light beam and at least one optical sensor 148 configured to receive and measure at least one reflected light beam and/or emitted thermal radiation.

Next, the method 900 continues with redirecting light between a first location in the fabrication environment and the at least one second location, the redirecting including at least one reflection of the light (block 930). Particularly, light is redirected by reflection using at least one structure of at least one optical system between a target location within the fabrication environment and the location(s) at which optical devices are situated external to the fabrication environment. The optical systems and structures used to redirect the light may include any of the optical systems, optical structures, transparent rods, reflective rods, discussed or suggested herein. In at least some embodiments, the light includes light generated by the laser 144 and/or the optical illuminator 146 and redirected onto a target location on the part 118 and/or the droplets of build material as they are ejected toward the platen 128. In at least some embodiments, the light includes light reflected and/or thermally emitted from a target location on the part 118 and/or the droplets of build material as they are ejected toward the platen 128, which is redirected onto the optical sensor 148.

Finally, the method 900 continues with controlling and/or monitoring at least one characteristic of the part and/or the droplets using the light source and/or the light sensor (block 940). Particularly, the computing system 108 is configured to operate the laser heating system 102 to heat at least a portion of the substrate 116 and/or an area proximal the substrate 116. In at least some embodiments, the laser heating system 102 heats a portion of the substrate 116 to control one or more characteristics or properties of the solid metal forming the part 118. In some embodiments, the computing system 108 is configured to operate the laser heating system 102 to reheat or re-melt a previously deposited drop or section of the part 118 to control the interfacial temperature and/or temperature gradient of the melt pool as the molten metal drops and the previously deposited metals are coalescing to thereby improve the mechanical and/or build qualities of the part 118.

Additionally, in some embodiments, the computing system 108 is configured to operate the optical illuminator 146 to shine light into the fabrication environment of the 3D object printer 100 and operates the optical sensor 148 to measure droplet temperatures, build part temperatures, build plate temperatures, substrate temperatures, build part shape, build part Z-height, droplet size, droplet rate, or the like. These measurements enable various types of feedback control to be implemented by the computing system 108. Particularly, in some embodiments, the optical monitoring system 130 is configured to communicate with the computing system 108 to provide feedback measurements. In some embodiments, the computing system 108 operates the components of the 3D object printer 100 with reference to the feedback measurements in a closed-loop manner. Particularly, in some embodiments, the computing system 108 operates the nozzle 124 with reference to the feedback measurements to control characteristics of the droplets of molten material ejected from the nozzle 124. Additionally, in some embodiments, the computing system 108 operates the laser heating system 102 with reference to the feedback measurements to control temperature characteristics of the part 118.

As used throughout, ranges are used as shorthand for describing each and every value that is within the range. Any value within the range may be selected as the terminus of the range. In addition, all references cited herein are hereby incorporated by reference in their entireties. In the event of a conflict in a definition in the present disclosure and that of a cited reference, the present disclosure controls.

Additionally, all numerical values are "about" or "approximately" the indicated value, and take into account experimental error and variations that would be expected by a person having ordinary skill in the art. It should be appreciated that all numerical values and ranges disclosed herein are approximate values and ranges, whether "about" is used in conjunction therewith. It should also be appreciated that the term "about," as used herein, in conjunction with a numeral refers to a value that may be ± 0.01% (inclusive), ± 0.1% (inclusive), ± 0.5% (inclusive), ± 1% (inclusive) of that numeral, ± 2% (inclusive) of that numeral, ± 3% (inclusive) of that numeral, ± 5% (inclusive) of that numeral, ± 10% (inclusive) of that numeral, or ± 15% (inclusive) of that numeral. It should further be appreciated that when a numerical range is disclosed herein, any numerical value falling within the range is also specifically disclosed.

As used herein, the term "or" is an inclusive operator, and is equivalent to the term "and/or," unless the context clearly dictates otherwise. The term "based on" is not exclusive and allows for being based on additional factors not described, unless the context clearly dictates otherwise. In the specification, the recitation of "at least one of A, B, and C," includes embodiments containing A, B, or C, multiple examples of A, B, or C, or combinations of A/B, A/C, B/C, A/B/B/ B/B/C, A/B/C, etc. In addition, throughout the specification, the meaning of "a," "an," and "the" include plural references. The meaning of "in" includes "in" and "on."

While the disclosure has been illustrated and described in detail in the drawings and foregoing description, the same should be considered as illustrative and not restrictive in character. It is understood that only the preferred embodiments have been presented and that all changes, modifications and further applications that come within the spirit of the disclosure are desired to be protected.

## Claims

1. An additive manufacturing device for fabricating a part, the additive manufacturing device comprising:
a platen having a surface configured to support the part during fabrication of the part;
an ejector head arranged above the surface of the platen, the ejector head being configured to eject droplets of a molten build material toward the surface of the platen to fabricate the part; and
an optical system having at least one structure configured to redirect light between (i) a first location in a fabrication environment situated between the platen and the ejector head and (ii) a second location.

2. The additive manufacturing device of claim 1 further comprising:
a light source arranged at the second location and configured to output the light, the light being redirected by the optical system from the light source toward the first location,
preferably wherein the light source is a laser configured to output a laser beam, the laser beam being redirected by the optical system from the laser toward the first location,
preferably further comprising:
a laser heating system configured to heat a portion of the part during the fabrication of the part, using the laser.

3. The additive manufacturing device of claim 2, wherein the light source is coupled with the at least one structure via a collimator, or wherein the light source is coupled with the at least one structure via a lens, or further comprising:
a monitoring system configured to measure at least one characteristic of at least one of the part and the ejected droplets of the molten build material, using the light source.

4. The additive manufacturing device of claim 1 further comprising:
a light sensor arranged at the second location and configured to receive at least one of reflected light and thermally emitted light from the first location, the at least one of the reflected light and the thermally emitted light being redirected by the optical system from the first location toward the second location.

5. The additive manufacturing device of claim 4, wherein the light sensor is one of (i) a camera configured to generate at least one image of the first location based on the reflected light and (ii) a pyrometer configured to measure a temperature at the first location based on the thermally emitted light, or further comprising:
a monitoring system configured to measure at least one characteristic of at least one of the part and the ejected droplets of the molten build material, using the light sensor.

6. The additive manufacturing device of claim 1, the optical system further comprising:
a first transparent rod having a first end and a second end, the light traveling through the first transparent rod in a longitudinal axial direction of the first transparent rod between the first end and the second end.

7. The additive manufacturing device of claim 6, wherein one of a light source and a light sensor is coupled to the first end of the first transparent rod, or wherein the second end of the first transparent rod has an angled end face with an angle relative to a longitudinal axis of the first transparent rod, the angle of the angled end face being configured to cause a total internal reflection of the light such that the light travels between the first end and the angled end face and travels between the angled end face and a side surface of the second end that is proximate to angled end face.

8. The additive manufacturing device of claim 7, wherein the angle of the angled end face relative to the longitudinal axis of the first transparent rod is about 45 degrees such that the light is reflected at an essentially right angle, or wherein the first transparent rod has a rotation such that the angled end face is oriented to one of (i) reflect the light toward the first location and (ii) receive the light that has been reflected from first location, or wherein the side surface of the second end has a radius of curvature that is different from a radius of curvature of another side surface of the and which is configured to shape the light when the light passes through the side surface, or wherein the angle of the angled end face relative to the longitudinal axis of the first transparent rod is less than about 45 degrees such that the light is reflected at an obtuse angle.

9. The additive manufacturing device of claim 6, the optical system further comprising:
a second transparent rod having a first end and a second end, the light traveling through the second transparent rod in a longitudinal axial direction of the second transparent rod between the first end to the second end; and
a transparent joint configured to mechanically and optically connect the second end of the first transparent rod to the first end of the second transparent rod, transparent joint having at least one angled surface configured cause at least one total internal reflection of the light within transparent joint that redirects the light between the second end of the first transparent rod and the first end of the second transparent rod.

10. The additive manufacturing device of claim 1, the optical system further comprising:
a rod having a first end with an angled end face, the angled end face being reflective and configured to reflect the light,
wherein the light travels along a path at least part of which is essentially colinear with a longitudinal axis of the rod.

11. The additive manufacturing device of claim 10, wherein one of a light source and a light sensor is arranged on the path along which the light travels, or wherein the angle of the angled end face relative to the longitudinal axis of the rod is about 45 degrees such that the light is reflected at an essentially right angle, or wherein the angled end face has a cylindrically concaved surface that is configured to shape the light when the light reflects off of the cylindrically concaved surface.

12. The additive manufacturing device of claim 1, wherein the at least one structure of the optical system is fixedly mounted to the ejector head, or wherein the at least one structure of the optical system is configured to be rotated by an actuator to adjust an angle of a path of the light, or wherein the second location is external to the fabrication environment.

13. The additive manufacturing device of claim 1, wherein the at least one structure of the optical system is at least partially embedded within a component of the ejector head.

14. The additive manufacturing device of claim 13, wherein the component of the ejector head is a heat shield, or wherein:
the component of the ejector head has a body that defines (i) a first bore in which the at least one structure of the optical system is disposed and (ii) a second bore that connects the first bore with an opening defined in a surface of the component that faces the platen; and
the light travels between the at least one structure of the optical system and the opening via the second bore, preferably wherein:
the at least one structure of the optical system is an essentially cylindrical rod and is rotatably mounted within the first bore.

15. A method for fabricating a part using an additive manufacturing device, the method comprising:
ejecting, using an ejector head, droplets of a molten build material toward a platen to fabricate a part within a fabrication environment situated between the platen and the ejector head;
redirecting light between a first location within the fabrication environment and at least one second location that is external to the fabrication environment, the redirecting including at least one reflection of the light, at least one of a light source and a light sensor being positioned at the at least one second location, the light including at least one of (i) light generated by the light source and redirected onto at least one of the part and the droplets, (ii) light reflected from at least one of the part and the droplets and redirected onto the light sensor, and (iii) thermally emitted light from at least one of the part and the droplets and redirected onto the light sensor; and
at least one of controlling and monitoring at least one characteristic of at least one of the part and the droplets using the at least one of the light source and the light sensor.
